(19) Europäisches Patentamt
European Patent Office
Office européen des brevets

(11) **EP 2 156 252 B1**

(12) **EUROPÄISCHE PATENTSCHRIFT**

(45) Veröffentlichungstag und Bekanntmachung des Hinweises auf die Patenterteilung:
**10.08.2011 Patentblatt 2011/32**

(21) Anmeldenummer: **08759064.2**

(22) Anmeldetag: **06.06.2008**

(51) Int Cl.:
**G05B 19/416** (2006.01)

(86) Internationale Anmeldenummer:
**PCT/EP2008/004519**

(87) Internationale Veröffentlichungsnummer:
**WO 2008/148558 (11.12.2008 Gazette 2008/50)**

(54) **MESS- ODER WERKZEUGMASCHINE MIT REDUNDANTEN TRANSLATORISCH WIRKSAMEN ACHSEN ZUR KONTINUIERLICHEN BEWEGUNG AN KOMPLEXEN BAHNKURVEN**

MEASURING MACHINE OR MACHINE TOOL HAVING REDUNDANT TRANSLATORY AXES FOR CONTINUOUS MOTION ON COMPLEX PATHS

MACHINE DE MESURE OU MACHINE-OUTIL À ARBRES REDONDANTS À ACTION TRANSLATOIRE POUR MOUVEMENT CONTINU SUR DES TRAJECTOIRES COMPLEXES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.06.2007 DE 102007026356**

(43) Veröffentlichungstag der Anmeldung:
**24.02.2010 Patentblatt 2010/08**

(73) Patentinhaber: **TRUMPF Werkzeugmaschinen GmbH + Co. KG**
**71254 Ditzingen (DE)**

(72) Erfinder: **EHLERDING, Andreas**
**30926 Seelze (DE)**

(74) Vertreter: **Kohler Schmid Möbus Patentanwälte**
**Ruppmannstraße 27**
**70565 Stuttgart (DE)**

(56) Entgegenhaltungen:
**EP-A- 0 594 699      EP-A- 1 688 807**
**DE-A1- 4 123 323    DE-A1- 19 851 781**
**US-A- 5 109 148**

## Beschreibung

### Technisches Gebiet und Stand der Technik

In der Entwicklung von Mess- und Werkzeugmaschinen kommt es zunehmend zum Einsatz von redundanten translatorisch wirksamen Achsen, also Achsen, die aufeinander aufbauend oder gegeneinander wirksam, parallel im Raum zueinander bewegbar sind, wobei ein oder mehrere Zusatzachsen mit einem relativ kurzen Bewegungsspielraum auf oder gegenüber von Basisachsen, mit einem relativ langen Bewegungsspielraum angeordnet sind.

Solche redundant in gleicher Richtung überlagert bewegbare Achsen, bieten die Möglichkeit den größeren Bewegungsspielraum der Basisachsen mit den höheren Beschleunigungsmöglichkeiten kurzwegiger und damit leichter gebauter Zusatzachsen, in einem kontinuierlichen Bewegungsablauf einer Messeinrichtung oder eines Werkzeuges, relativ zu einem Mess- oder Bearbeitungsgut, zu kombinieren.

Ein Beispiel für ein derartiges Konzept ist das Patent EP 594 699 B1 (Ehlerding). In besagtem Patent wurde vorgeschlagen, parallel ausgerichtete überlagert wirksame Achsanordnungen zu nutzen, um die hohen Beschleunigungen leichter kurzwegiger Achsen im gesamten Arbeitsbereich weniger beschleunigbarer, langwegiger Achsen, in solchen Werkzeugmaschinen zu ermöglichen, die vorzugsweise für eine Bearbeitung von flächigen oder flachen Werkstücken in zwei oder drei orthogonal zueinander ausgerichteten Achsen ausgelegt sind.

Aus dieser Veröffentlichung ist bekannt, dass hier als Zusatzachsen bezeichnete kürzere Teilachsen von einem über dem Material bewegbaren Portal mit einer die Zusatzachsen tragender Bewegungseinheit, die sich wiederum an dem Portal entlang bewegt, getragen sein können, oder mittels Basisachsen auch das Material bewegt werden kann, wobei sich ein Werkzeug mittels Zusatzachsen nochmals unabhängig von der Bewegung durch die Basisachsen, gegenüber dem Material bewegen kann. Genauso ist auch vorstellbar ein oder mehrere Zusatzachsen, die ein Werkzeug tragen, an einem festen Portal entlang, als einer Basisachse, über das Material zu bewegen, während das Material mittels einer weiteren orthogonal zum Portal orientierten Basisachse unter dem Portal entlang bewegt wird.

Allgemein ist bekannt, dass anstatt eines Portals auch eine Traverse oder ein bewegbarer oder stationärer Arm oder Ausleger mit bewegter oder stationärer Stütze als Träger von Zusatzachsen dienen kann und dass alle genannten Achskonfigurationen auch abweichend vom üblichen Fall, in dem die Basisachsen vorzugsweise die schweren Maschinenteile oder das schwere Mess- oder Bearbeitungsgut in der horizontalen Ebene bewegen, auch eine andere Orientierung im Raum besitzen können.

Statt der Messeinrichtungen oder Werkzeuge kann auch leichtes oder kleines Mess- oder Bearbeitungsgut durch die Zusatzachsen getragen und durch gemeinsame Bewegung von Basis- und Zusatzachsen entlang von Messeinrichtungen oder Werkzeugen geführt werden, ohne dass hierzu eine grundlegend andere Koordination erforderlich wäre.

Beispielsweise aus WO 2006/75209 A2 (Gattiglio et al) ist zudem bekannt, dass Zusatzachsen zwar physisch orthogonal zueinander ausgerichtet sind, und sich gemeinsam in einer Ebene bewegen, die an zwei Basisachsen ausgerichtet ist, jedoch so, dass die physischen Zusatzachsen in dieser Bewegungsebene nicht parallel zu den Basisachsen ausgerichtet sind, beispielsweise, wie in WO 2006/75209 A2, um 45° gegenüber den Basisachsen in der gemeinsamen Bewegungsebene gedreht.

Eine redundante, parallel ausgerichtete Wirkung der Achsen ist grundsätzlich auch hier leicht zu implementieren, da die hierzu notwendige feste Transformation zwischen den Ausrichtungen von zwei an den physischen Achsrichtungen orientierten kartesischen Koordinatensystemen, mittels simpelster konstant wirkender analoger, digitaler oder computertechnisch berücksichtigter Multiplikationselemente, problemlos auch für den durchschnittlichen Fachmann vorzusehen ist.

Weiterhin ist aus dem Stand der Technik bekannt, dass anstelle linear bewegter Zusatzachsen, auch der Einsatz rotorisch um einen meist geringen Winkelbetrag bewegbarer Einrichtungen möglich ist, so dass mittels eines ausreichenden Abstandes zwischen Drehpunkt und Mess- oder Bearbeitungspunkt, eine ausreichend angenähert lineare Bewegung der für die Messung oder Bearbeitung relevanten Elemente einer Messeinrichtung oder eines Werkzeuges entsteht.

Eine Variante hiervon wird genutzt, wenn gebündelte Strahlungsenergie, meist ein Laserstrahl, mittels schwenkbarer Spiegel oder anderer Ablenkungselemente auf eine Bearbeitungsstelle gelenkt wird.

Zusatzachsen in diesem Sinne werden beispielsweise in dem Dokument WO 96/29634 A1 (Cutler et al) ausführlich behandelt, siehe illustrativ hierzu besonders Fig. 2 und Fig. 4 dort.

Ähnliche mechanische Verhältnisse betreffend der Zusatzachsen sind auch für andere Werkzeuge denkbar, beispielsweise rotierbare Fräsköpfe, oder entsprechende Messeinrichtungen, wobei oft zusätzlich eine Bewegung längs der Werkzeug- oder beispielsweise einer Messtasterachse möglich ist, auch zur Kompensation der Abweichung von einer zur jeweiligen Basisachse exakt parallelen Bewegung.

Ebenso ist aus dem US Patent 5 910 260 (Gerber) eine ähnliche Achskonfiguration bekannt, mit einer als "beam shifter" bezeichneten Ablenkeinheit für einen Laserstrahl. Betreffend der Koordination wird dort gelehrt, dass die trägeren Basisachsen eine weniger detaillierte Version der Sollkontur abfahren, während ergänzend sich die Zusatzachsen entsprechend der in der Bahn der Basisachsen fehlenden Details bewegen.

Tatsächlich ist dies jedoch eher eine Aufgabenbeschreibung als eine technische Lösung des Problems, da hier völlig unklar bleibt, wie diese getrennten Bewegungsanteile erzeugt werden und wie eine ausreichend synchronisierte und effiziente Koordination beider Achsarten technisch realisiert werden kann.

Alle dort in Beschreibung und Ansprüchen genannten Lösungsansätze hierfür, können keine effiziente Nutzung der Zusatzachsen bei zugleich weitgehend konstanter Bewegungsgeschwindigkeit des Werkzeuges gegenüber dem Material sicherstellen.

Entweder ist vorgesehen die Basisachse in ihrer Bewegungsgeschwindigkeit zu verlangsamen, um den Zusatzachsen das Abfahren der Details mit der Sollgeschwindigkeit und konstanten Bearbeitungsparametern zu erlauben

(Anspruch 15 dort, letzter Teilsatz), oder es ist eine Beschleunigung der Bearbeitungsgeschwindigkeit während der Nutzung der Zusatzachsen vorgesehen (Anspruch 16 dort, letzter Teilsatz).

Details ("Features") können dort sowohl die von der Sollkontur abgetrennte Differenz zur Bewegung der Basisachsen sein, als auch eigenständige Konturen, die synchron zur Bewegung der Basisachsen an bestimmten Positionen separat ausgeführt werden sollen, wie in der Beschreibung dort, in Spalte 4, Zeilen 43 bis 54, ausgeführt wird.

Dies alles führt jedoch nicht zu technisch nachvollziehbaren effektiven Lösungen. Dass die "Features" mit höher Geschwindigkeit ausgeführt werden sollen, als die sonstige Bearbeitung, steht in völligem Gegensatz zum üblichen Ziel einer effizienten gleichmäßigen Bearbeitung mit der höchstmöglichen Geschwindigkeit, so dass es nicht sinnvoll erscheint diese Möglichkeit hier weiter vertiefend zu diskutieren. Jedoch reicht es ebenso auch nicht, lediglich darauf hinzuweisen, dass die Geschwindigkeit der Basisachsen zur Erzielung einer gleichmäßigen Bearbeitungsgeschwindigkeit abnehmen sollte, wenn die Zusatzachsen zur Ausführung der "Features" zum Einsatz kommen.

Einerseits wäre dies wohl schon dem völligen Nichtfachmann anhand simpelster Summenbildung in den Sinn gekommen. Andererseits geht daraus nicht die geringste Information für ein funktionierendes Konzept zur entsprechenden Koordinierung der Achsen hervor.

Es ist unmöglich aus der Patentschrift US 5 910 260 auch nur eine grobe Regel zu entnehmen, wie eine Verlangsamung der Bewegung der Basisachsen, passend zu den Bewegungen der Zusatzachsen erfolgen soll, um eine weitgehend konstante Bearbeitungsgeschwindigkeit zu erhalten.

Ohne eine solche Regel, die für die von vornherein getrennte Abarbeitung entsprechender Teilkonturen durch Basis- und Zusatzachsen auch aus dem Stand der Technik nicht bekannt ist, dürfte die Realisierung einer entsprechenden Achskoordination jedoch nicht möglich sein.

Es wird nicht beschrieben wie zwei ausschließlich geometrisch definierte Teilkonturen in einer synchronen Bewegung von Teilsystemen wieder in eine Sollkontur zusammenzuführen sind. Dies wäre ein im Zeitverlauf komplexer Vorgang, für den bisher kein passender Stand der Technik vorliegt, der hierzu, für den Fachmann klar ersichtlich, verwendbar wäre.

In der Patentschrift EP 1 294 544 B1(Sartorio) wird eine weitere Konfiguration gezeigt und als eine Neuerung gegenüber dem früheren Stand der Technik eine zweiachsig linear bewegbare parallelkinematische Zusammenfassung der hoch beschleunigbaren Zusatzachsen gelehrt, was insbesondere zu dem Vorteil führt, dass in beiden horizontalen Hauptbewegungsrichtungen einer derart realisierten Maschine insoweit vergleichbare kinematische Verhältnisse herrschen, was die Effizienz einer zweidimensionalen Werkzeugbewegung verbessern kann.

Über die praktische Koordination der simultan betriebenen Achsen wird jedoch ebenfalls wenig offenbart. Lediglich einige wesentliche Rahmenbedingungen werden genannt, die bei der Koordination der Teilachsen gelten sollen. Ab Satz [24] bis Satz [39] der Beschreibung und im Hauptanspruch wird im Patent EP 1 294 544 B1 hierzu etwas ausgeführt.

Insbesondere wird für wichtig gehalten (ab Satz [36] der Beschreibung), dass die Basisachsen sich wesentlich schneller bewegen können, als die höchste Bearbeitungsgeschwindigkeit.

Dies soll bewirken, dass im Verlauf einer simultanen Gesamtbewegung, nach einem hoch beschleunigten Voreilen der Zusatzachsen und vor einer neuerlichen hohen Beschleunigung, die Basisachse wieder aufholen kann und somit die Zusatzachse sich nicht vor der nächsten Bewegung schon am Rand ihres maximalen Bewegungsbereiches befindet, so dass weitere hoch beschleunigte koordiniert simultane Bewegungen nicht mehr, oder nicht ausreichend, möglich wären und es so zu unerwünschten Diskontinuitäten, besonders bei einer mehrdimensionalen Bewegung des Werkzeuges, kommen könnte.

Wie nun aber eine überlagerte Bewegung der Teilachsen tatsächlich koordiniert werden soll, darüber findet sich in EP 1 294 544 B1 keine weitere Information.

Somit ist dieses Dokument auch wenig hilfreich bei der praktischen Ausführung einer entsprechenden Maschine, da völlig im Dunkeln bleibt, wie und aus welchen Bedingungen sich die jeweiligen Daten zur Auslegung der einzelnen Komponenten ergeben sollen.

Der Zusammenhang zwischen Bewegungsgeschwindigkeit eines Werkzeuges gegenüber dem Material, Maximalgeschwindigkeiten der Basis- und Zusatzachsen, Beschleunigungen und des notwendigen Bewegungsspielraumes für die Zusatzachsen, in Abhängigkeit von diesen Größen, wird nirgendwo hergestellt.

Die einzigen Informationen, die aus dem oben genannten Abschnitt der Beschreibung, zu entnehmen sind, ergeben die Lehre, dass die Maximalgeschwindigkeit der Basisachsen wesentlich höher sein müsse als die Werkzeuggeschwindigkeit, und dass es möglich sei aus den genannten Bedingungen und der Voraussetzung bekannter Maschinendaten die notwendigen Gleichungen aufzustellen, um die noch unbekannten Maschinendaten zu ermitteln.

Offenbar auf dieser noch unvollständigen Lehre aufbauend, wird in EP 1 758 003 A1 (Cardinale et al) eine Koordination der Achsen vorgeschlagen, die einerseits nach dem Prinzip der inversen Kinematik die redundanten Freiheitsgrade einer Bewegungsmechanik in einem hoch abstrakt mathematisierten Verfahren nutzen soll, andererseits aber in den tatsächlich anwendbar ausformulierten Beispielen und Patentansprüchen gegenüber dem bekannten Stand der Technik nichts wirklich neues bietet.

Insbesondere wird zu einer möglichen Auslegung einer für solche Verfahren passenden Maschine aber beispielhaft das wiederholt, was schon in EP 1 294 544 B1 zu lesen war:

Die Maximalgeschwindigkeit der Basisachsen wurde deutlich höher gewählt, als die der Zusatzachsen.
(Siehe EP 1 758 003 A1, Beschreibung, Satz 32 und Anspruch 9).

Dem gegenüber offenbart der ältere Stand der Technik aus EP 594 699 B1, neben einer Frequenzaufteilungsmethode zur Erzeugung getrennter Ansteuerungssignale für die von vornherein koordiniert auf verschiedene Beschleunigungsbereiche aufgeteilte Bewegung der Teilachsen, auch noch eine wichtige Rahmenbedingung bei der Konzeption derartiger Maschinen, die ohne Einschränkungen für jede auch mit maximaler Arbeitsgeschwindigkeit abgefahrene Bahnkontur, die volle Beschleunigungsmöglichkeit der Zusatzachsen für den gesamten Bewegungsbereich der Basisachsen ermöglichten soll.

So wird in EP 594 699 B1 auf eine minimal notwendige Bewegungsfreiheit der Zusatzachsen in Abhängigkeit von der Werkzeuggeschwindigkeit und der Beschleunigungsfähigkeit der Basisachsen hingewiesen.

Siehe hierzu Spalte 4, Zeile 27 bis Zeile 51 der Beschreibung.

Und als wichtige Ergänzung der Methode, die Gesamtbewegung einer Achse, bezüglich der Beschleunigung in verschiedene Anteile zu zerlegen, wird in EP 594 699 zusätzlich gezeigt, dass in einer derartigen Konfiguration auch Summensignale für Position und Geschwindigkeit zur Rückkopplung, für eine aus überlagerten Anteilen bestehenden Achse genutzt werden können, statt einer separaten Rückkopplung jeder Teilachse.

Dies bietet insbesondere den Vorzug, dass sich somit automatisch auch eine Gegenkopplungsdynamik für die jeweilige Gesamtachse ergibt, die der Dynamik der hoch beschleunigbaren Zusatzachse entspricht, womit auch die Bewegungsabweichungen der weniger beschleunigten Basisachse von einer Gesamtsollbahn mit hoher Dynamik korrigiert werden.

Aber auch diese Beschreibung ist in einigen Aspekten unvollständig und lässt eine ganze Reihe von Fragen, die sich in Details der Koordination von überlagerten Achsen ergeben unbeantwortet.

In einem zu der im bisher beschriebenen Stand der Technik benachbarten Themenbereich, und zwar der aktiven Kompensation von Sollabweichungen

bei der Bewegung in Werkzeugmaschinen oder sonstigen Bewegungseinrichtungen durch üblicherweise sehr kurzhubige Bewegungselemente, existiert schon ein vielfältiger Stand der Technik hierzu, wobei die besagten kurzhubigen Bewegungselemente meist ebenfalls als zusätzliche parallel zu den Maschinenachsen ausgerichtete Achsen angesehen werden können.

Dies ist hier aber im wesentlichen beschränkt auf eine aktive Korrektur von Fehlern, die durch gewöhnlich elastische Verformungen der Strukturen, Schwingungen und Regelungsproblemen von relativ massereichen Bewegungselementen unter hohen Beschleunigungen bedingt sind.

Sehr allgemein gehalten, mit breit gestreuten Beispielen, angefangen mit der Regelung von Leseköpfen in der EDV bis hin zum Maschinenbau, hat sich US Patent 5 801 939 (Okazaki) mit dieser Problematik in seiner Beschreibung grundlegend auseinandergesetzt.

So ist in diesem Patent ein noch früherer Stand der Technik vom 1. Oktober 1991 beschrieben, der dort mit Bezug auf Fig. 9 von Spalte 3, Zeile 5 bis Zeile 18 und von Spalte 4, Zeile 35 bis Zeile 46, bezüglich der immer möglichst angestrebten Mittelposition der kurzhubigen Bewegungselemente, eine allgemein nutzbare Lösung offenbart, in der das Positionsausgangssignal des kurzhubigen Bewegungselementes dem Eingangssignal der zugehörigen Maschinenachse nach Durchlaufen eines integrierenden Elementes hinzuaddiert wird. Je nach der durch das integrierende Element bestimmten Zeit wird somit während einer unbeschleunigten Phase der Gesamtbewegung ein Einpendeln des kurzhubigen Elementes in seiner Null-Position erreicht, womit ein häufiges Randproblem der Koordination überlagert betriebener Achsen auf allgemein anwendbare Weise gelöst ist.

Ebenso zu dem besagten benachbarten technischen Bereich gehört das US Patent 5 109 148 (Fujita & Bamba). Dort wird ebenfalls für den Betrieb überlagerter Achsen einiges zum Stand der Technik Relevantes offenbart. Schrittweise in seiner Komplexität und Leistungsfähigkeit gesteigert, wird ein grundsätzlich allgemein zur Steuerung überlagerter Achsen geeignetes Regelmodell beschrieben.

Mit Bezug zu den Zeichnungen Fig. 3(b) bis Fig. 6, sowie Fig. 8 und 9 wird in dem ausführlichen Beschreibungsteil für die vorzugsweise zu realisierenden

Erfindungsvarianten zunächst ein relativ einfaches positionsabhängiges Regelmodell beschrieben, das dann in Fig. 4 um die Berücksichtigung der Geschwindigkeitskomponente der weniger beschleunigbaren Teilachse erweitert wird, was in Fig. 5 nochmals in ein Geschwindigkeitsfehlersignal verfeinert wird und schließlich in Fig. 6 entsprechend auch die Beschleunigungskomponente mit einbezieht.

Mit Bezug auf Fig. 8 und 9 wird dann eine Regelung für eine in zwei Achsen überlagert bewegbare Maschine beschrieben, bei der zusätzlich berücksichtigt wurde, dass in einer Achse die Zusatzachse von der Basisachse getragen wird, und daher die Beschleunigungskomponente der getragenen Zusatzachse, abhängig von der Beschleunigung der tragenden Basisachse, mit einem zusätzlichen Signal beaufschlagt wird.

Diese Beispiele für den Stand der Technik zeigen, dass grundsätzlich eine überlagerte Bewegung von parallel ausgerichteten Achsen zum Abfahren einer gegebenen Sollbahn nach dem Stand der Technik koordinierbar ist und wie die Regelzweige überlagert wirkender Antriebe untereinander durch die Verknüpfung von Regelgrößen beeinflusst werden können, um die Qualität des Gesamtregelverhaltens zu verbessern und somit eine verbesserte Bahngenauigkeit und Beschleunigungsfähigkeit eines Gesamtbewegungssystems zu erreichen.

Eine weiter verfeinerte Variante in die gleiche Entwicklungsrichtung wurde im Patent DE 101 567 81 C1 (Heinermann et al) offenbart. Gegenüber dem bisher schon beschriebenen Stand der Technik sind dort insbesondere die Ansprüche 6 bis 10 und 12 von Interesse, da in den zuvor aufgeführten Dokumenten noch nicht offenbart wurde, dass die Positionsbestimmung des TCP (Tool Center Point), des unmittelbar von der Zusatzachse angetriebenen Werkzeuges auch ausschließlich über die Auswertung von Beschleunigungsmessungen abgeleitet werden kann und vorzugsweise ein Hochpassfilter hierbei vorgesehen ist, um störende Dauersignale zu unterdrücken, beispielsweise durch Gravitationseinflüsse bei nicht perfekt horizontaler Ausrichtung.

Den drei zuletzt aufgeführten Dokumenten zum Stand der Technik ist, im deutlichen Unterschied zu den zu Anfang aufgeführten Beispielen, jedoch eines gemeinsam: Sie gehen ausdrücklich von sehr kurzen Zusatzachsen zur Kompensation von Bewegungsfehlern durch die üblichen Maschinenachsen oder der gesamten

Maschinenstruktur aus:

US Pat 5 801 939 Beschr. Spalte 7, Zeile 32 bis Zeile 35, "The fine positioner ..."
US Pat 5109 148 Beschr. Spalte 5, Zeile 29 bis Zeile 30, "By the way ..."
DE 101 567 81 C1 Beschr. Satz [24], dritter Punkt "- der Zusatzantrieb ..."

Dem in diesen Dokumenten offenbarten Stand der Technik ist ebenso gemeinsam, dass das Ziel der Zusatzachsenbewegung immer die Kompensation von Bewegungsabweichungen der zu korrigierenden weniger beschleunigbaren oder mit einer gröberen Positionierbarkeit behafteten Basisachsen ist.

Lediglich in US Pat 5 109 148 wird, allerdings ohne auf weitere Details einzugehen, beschrieben dass es möglich sei, durch ein "smoothing filter" die Basisachse von starken Beschleunigungskräften zu entlasten, die dann durch Kompensationsbewegungen der Zusatzachsen übernommen werden.

Siehe hierzu Anspruch 5 dort und die Beschreibung, Spalte 5, Zeile 16 bis Zeile 34.

Auch die Verbindung der Bewegung beider überlagerter Achsteile zu einer Gesamtbewegung wird dort in einem Satz ab Zeile 31 erwähnt.

Dies ist zwar abstrakt gesehen in einem gleichzeitigen Betrieb zweier parallel ausgerichteter Achsen selbstverständlich immer der Fall, jedoch ist dies hier mit Hinweis auf die Verbindung zum "smoothing filter" erwähnt worden, wodurch, neben der besagten Frequenzaufteilung der Teilbewegungen mittels Filtern in EP 594 699 B1, ein weiteres ähnliches Mittel offenbart wird, das grundsätzlich ebenfalls zur von vornherein geplant auf verschiedene Beschleunigungsbereiche aufgeteilten Bewegung der Teilachsen geeignet ist, im Gegensatz zur bloßen Korrektur oder Kompensation von Sollabweichungen der weniger beschleunigbaren Basisachsen, durch die höher beschleunigbaren Zusatzachsen.

Da auf diese grundsätzliche Möglichkeit in US 5 109 148 jedoch nicht näher eingegangen wird, fehlt dort auch jeder Hinweis darauf, dass und unter welchen weiteren Bedingungen ein Betrieb möglich wäre, der ohne wesentliche Einschränkungen für jede mit Arbeitsgeschwindigkeit abgefahrene Bahnkurve die volle Beschleunigungsmöglichkeit der Zusatzachsen für den gesamten Bewegungsbereich der Basisachsen ermöglicht.

Der Grundgedanke bleibt dort die Kompensation oder Korrektur einer Abweichung der Hauptachse durch die Zusatzachse, so dass zum grundsätzlich gleichgestellten Betrieb von Haupt- und Zusatzachse und zur optimalen gemeinsamen Nutzung der Eigenschaften beider Achsarten keine problemlösende technische Lehre vorliegt.

Für das schon erwähnte Dokument WO 96/29634 A1 gilt, dass zwar nicht nur von Fehlerkompensation durch Zusatzachsen die Rede ist (siehe beispielsweise Seite 1, Zeilen 18 bis 22), tatsächlich jedoch keine universell nutzbare Lehre für eine mehrstufige Positionierungsvorrichtung geboten wird, die über das hinausgeht, was nicht schon aus US Pat 5 109 148 bekannt wäre.

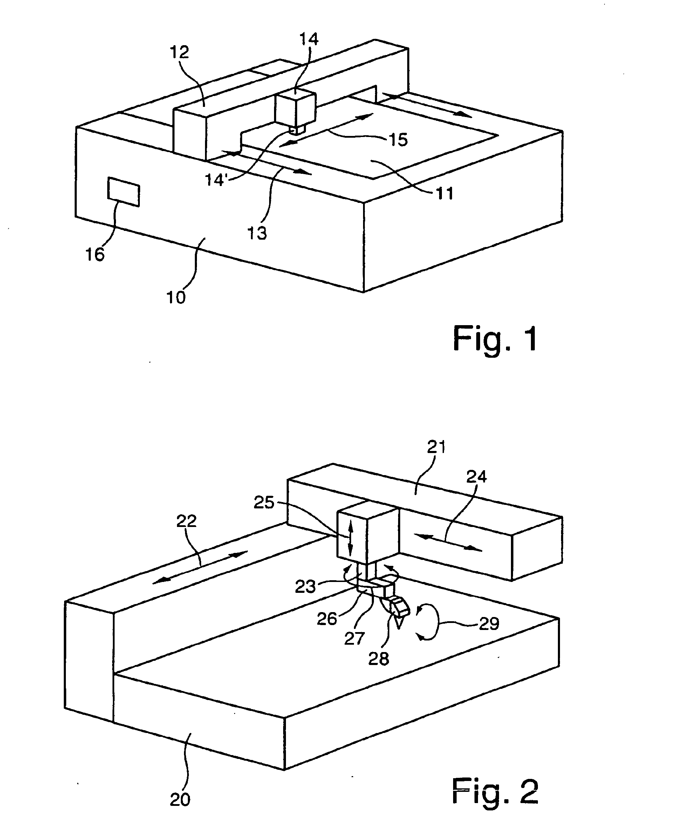

Im Laufe der Beschreibung erfährt man genauer, wie die Koordination stattfinden soll: Wenn ein relativ zum Bearbeitungsgut zurückzulegendes Bahnsegment, das vom so genannten "Delta Process" (Fig. 2, 70 dort) an die nachfolgenden Verarbeitungsstufen ausgegeben wird, kürzer ist als 25% des Bewegungsspielraumes der hoch beschleunigbaren Zusatzachse, so werden die Grenzwerte für Beschleunigung und Geschwindigkeit an den Grenzwerten der Zusatzachse ausgerichtet, sonst an die Basisachsen angepasst.

(Siehe Seite 10 dort, Zeilen 16 bis 31)

Solch ein recht grobes Verfahren ist jedoch nur zur dort behandelten schrittweisen Positionierung auf eine Sequenz von Bearbeitungspunkten geeignet und nicht zur kontinuierlichen Bewegung einer Messeinrichtung oder eines Werkzeuges auf einer komplexen Bahnkurve. Dies gilt auch für die weiteren dort beschriebenen Beispiele.

Wie schon erwähnt, offenbaren auch andere aufgeführte Dokumente keine hierfür verwertbaren Erkenntnisse, so dass bisher allein in EP 594 699 B1 überhaupt eine erste Bedingung genannt wurde, die einen Stand der Technik bezüglich der notwendigen Auslegung der Basisachsen und Zusatzachsen offenbart, der über praktisch wenig nutzbare Abstraktionen oder Experimentieranleitungen hinausgeht, oder das, was für die reine Kompensation einer Sollabweichung der Basisachsen durch Zusatzachsen notwendig wäre.

Es handelt sich dabei insbesondere um die Bestimmung des notwendigen Bewegungsspielraums der Zusatzachsen, in Abhängigkeit von der angestrebten Arbeitsgeschwindigkeit und der maximalen Beschleunigung der weniger beschleunigbaren Basisachsen.

Weiche Geschwindigkeit der Zusatzachsen im Verhältnis zur angestrebten Mess- oder Bearbeitungsgeschwindigkeit sinnvoll wäre, darüber finden sich im Stand der Technik bisher ebenso keine systematischen Auskünfte.

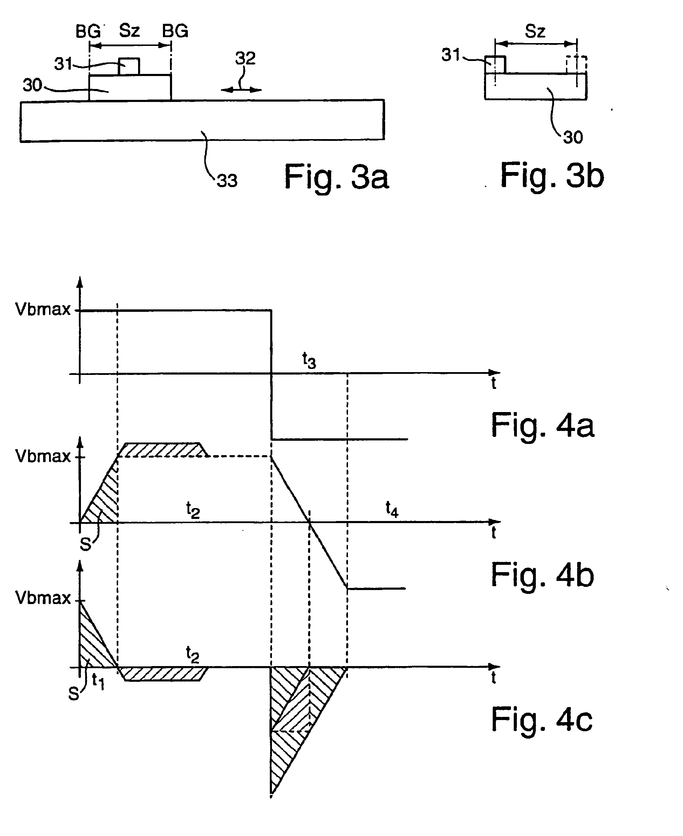

Die indirekten Hinweise lassen bei den primär an einer reinen Kompensation orientierten Dokumenten, wegen der kurzen Bewegungen, ohnehin nur geringe Geschwindigkeiten zu, unabhängig davon ob diese Achsen physisch zu höheren Geschwindigkeiten in der Lage wären, und in EP 1 204 544 B1 findet sich zwar ein Hinweis auf eine notwendigerweise gegenüber der Bearbeitungsgeschwindigkeit erhöhte Geschwindigkeit der Basisachsen, aber keinerlei Hinweis auf die notwendigen Geschwindigkeiten der Zusatzachsen. Auch der dort dargestellte "most critical case" (Satz [33], Fig. 4) würde von einer Zusatzachse maximal die beabsichtigte Bearbeitungsgeschwindigkeit fordern, weshalb es auch wohl nicht näher erwähnt wurde. Zum letzten Punkt gilt dies auch für EP 594 699 B1. EP 1 758 003 A1 wurde oben schon entsprechend erwähnt.

Wie nun neuere Untersuchungen des Erfinders der hier vorliegenden Erfindung zeigen, wurden im Stand der Technik kritische Betriebssituationen nicht derart berücksichtigt, dass die dort angegebenen Auslegungen ausreichend wären, um das Beschleunigungspotential der Zusatzachsen, für jede denkbare Bewegung der Gesamtachsen bei einer hohen angestrebten konstanten Mess- oder Bearbeitungsgeschwindigkeit, wirksam werden zu lassen.

Aufgabe der Erfindung ist es daher, ausgehend vom Stand der Technik zur Verwendung von redundant translatorisch wirksamen Teilachsen in Mess- und Bearbeitungsmaschinen, ein Konzept solcher Maschinen oder ein Verfahren zu offenbaren, das geeignet ist, um für eine Messung oder Bearbeitung das Beschleunigungspotential hoch beschleunigter Teilachsen, hier als Zusatzachsen bezeichnet, für jede grundsätzlich mögliche Bewegung der Gesamtachsen im Bewegungsbereich der weniger beschleunigbaren Teilachsen, hier als Basisachsen bezeichnet, bis hin zur einer maximal geeigneten Mess- oder Bearbeitungsgeschwindigkeit ohne Einschränkung wirksam werden zu lassen.

## Beschreibung der Erfindung

Die Erfindungsaufgabe wird gelöst durch eine Mess- oder Werkzeugmaschine mit den Merkmalen des Anspruchs 1. In den Rahmen der Erfindung fällt auch eine Mess- oder Werkzeugmaschine mit den Merkmalen des Anspruchs 17 und ein Verfahren mit den Merkmalen des Anspruchs 9 und einem Verfahren mit den Merkmalen des Anspruchs 18.

Für alle Varianten von redundant translatorisch wirksamen Achsanordnungen, die mit einer gleichzeitigen Bewegung der überlagerten Achsanteile arbeiten, ergibt sich eine Begrenzung der maximal möglichen Beschleunigung und konstanten Arbeitsgeschwindigkeit, wenn ein kontinuierlicher Bewegungsablauf über die Bereichsgrenzen, der kürzeren hoch beschleunigbaren Achsanteile (Zusatzachsen), hinausgeht.

Diese Geschwindigkeitsgrenze hängt hauptsächlich von der Entfernung zwischen den besagten Bereichsgrenzen der Zusatzachsen und der maximal möglichen Beschleunigung der langsamer beschleunigbaren Basisachsen ab.

Eine Näherungsformel hierfür wurde schon in EP 594 699 B1 angegeben. Jedoch ist die Formel nur für solche Bewegungen korrekt, die sich innerhalb der zu koordinierenden parallel ausgerichteten Achskombination in eine Richtung bewegen. Die Verhältnisse bei erheblichen aufeinander folgenden Gegenbewegungen wurden nicht berücksichtigt.

Für eine Bewegung mit maximaler Mess- oder Bearbeitungsgeschwindigkeit, aus dem Stand heraus, benötigt eine Basisachse einen Weg S von $Vbmax^2 / 2Bb$, wobei S für Beschleunigungsstrecke, Vbmax für die höchste Mess- oder Bearbeitungsgeschwindigkeit und Bb für die Beschleunigung der Basisachse steht. Spätestens nach diesem Weg kann die Basisachse die komplette Bewegung übernehmen, so dass die Zusatzachse, die während dieser Beschleunigung die Differenzgeschwindigkeit übernommen hat, annähernd auch dieselbe Wegstrecke in ihrem Bewegungsbereich (Sz) zurücklegen musste.

Wenn jedoch aus einer solchen Bewegung heraus eine Richtungsumkehr erfolgt und eine Bewegung, die wiederum die gegenüberliegende Grenze des Bewegungsbereiches der Zusatzachse überschreiten würde, so benötigt die Basisachse, da die Relativgeschwindigkeit zur Sollbewegung nun doppelt so hoch ist, bei gleicher Beschleunigung auch die doppelte Zeit um wieder die angestrebte Geschwindigkeit in der anderen Richtung zu erreichen.

Das Ergebnis wäre, dass die Zusatzachse nun schon die vierfache Strecke hätte zurücklegen müssen, da sie, etwas vereinfacht, mit der doppelten Geschwindigkeit starten muss, um die überschießende Bewegung der Basisachse solange in die Gegenrichtung zu kompensieren, bis die Basisachse wieder die Sollgeschwindigkeit erreicht hat.

Daher ergibt sich <u>erstens</u>, dass die minimal notwendige Bewegungsfreiheit der Zusatzachse (Sz), um die träge Basisachse in jeder Lage bewegungsmäßig kompensieren zu können, annähernd 4 x $Vbmax^2$ / 2Bb also vereinfacht 2 x $Vbmax^2$ / Bb betragen muss und <u>zweitens</u>, sich die Zusatzachse kurzzeitig mit mindestens annähernd der doppelten Mess- oder Bearbeitungsgeschwindigkeit bewegen muss.

Unabhängig davon, ob diese Werte, je nach Anwendungsfall, im Detail auch etwas geringer ausfallen können, ist nach dem aufgeführten Stand der Technik meist zusätzlich zu berücksichtigen, dass die Ausgangsposition der Zusatzachse vorzugsweise in der Mitte ihres Bewegungsbereiches liegt, so dass man diese Distanz zu den Grenzen des Bewegungsbereiches noch einmal doppelt benötigt, womit sich ein maximal notwendiger Bewegungsspielraum der Zusatzachse von insgesamt 4 x $Vbmax^2$ / Bb ergibt, wenn aufbauend auf dem bisherigen Stand der Technik eine Nutzung des vollen Beschleunigungspotentials der Zusatzachsen bei einer Mess- oder Bearbeitungsgeschwindigkeit Vbmax für jede Eventualität garantiert sein soll.

(erfindungsgemäße Ausnahmen hiervon werden weiter unten behandelt) Umgekehrt kann so bei gegebenem Bewegungsspielraum der Zusatzachsen und bekannter Beschleunigung der Basisachsen entsprechend leicht die unkritische Maximalgeschwindigkeit für Mess- oder Bearbeitungsbewegungen grob bestimmt werden, da eine Umstellung der obigen Gleichung Vbmax=SQRT(Sz x Bb / 4) ergibt. (SQRT = Quadratwurzel)

Diese Angaben stimmen nur näherungsweise, weil hierbei - der Übersichtlichkeit halber - das begrenzte Beschleunigungsvermögen der Zusatzachsen nicht extra berücksichtigt wurde.

Bei relativ hohen Beschleunigungswerten der Zusatzachse ergeben sich in ausreichend guter Näherung die nach obigen Gleichungen bestimmten Werte für den erforderlichen Bewegungsspielraum der Zusatzachsen und die maximale unkritische Mess- oder Bearbeitungsgeschwindigkeit.

Wenn die Beschleunigungen beider Achsarten berücksichtigt werden sollen, lauten die entsprechenden Gleichungen:

$$Sz=4 \text{ x } Vbmax^2 \text{ x } (1/Bb-1/(Bb+Bz)), \quad Vbmax=SQRT(Sz/ 4 \text{ x } (1/Bb-1/(Bb+Bz)))$$

Die notwendige Höchstgeschwindigkeit einer Zusatzachse errechnet sich entsprechend:

$$Vzmax=2 \text{ x } Vbmax / (1+ Bb/Bz)$$

Dabei ist zu berücksichtigen, dass Bz den Beschleunigungsbetrag der Zusatzachse bezeichnet, der einer relativen Bewegung zwischen Werkzeug und Bearbeitungsgut oder Messeinrichtung und Messgut durch die jeweilige Zusatzachse tatsächlich hinzugefügt wird.

Dies ist insbesondere bei einander tragenden gleichgerichteten Achsen zu beachten, da in diesem Fall die notwendige Kraft für den Beschleunigungsbetrag der Basisachse, wenn parallel auch an der Zusatzachse wirksam, noch keinen zusätzlichen Bewegungsanteil erzeugt, sondern erst ein Überschuss über die Kraft zum Ausgleich der Beschleunigung der Basisachse zu einem entsprechenden relativen Bewegungsanteil führt.

Dass dieser Punkt bei parallel ausgerichteten überlagert betriebenen Achsen berücksichtigt wird, entspricht dem Stand der Technik, wie oben auch schon am Beispiel US Patent 5 109 148, mit Hinweis auf Fig. 9 dort, erwähnt wurde.

Die obigen Gleichungen gehen davon aus, dass, entsprechend dem überwiegend veröffentlichten Stand der Technik, als angestrebte Ruheposition bei unbeschleunigter Gesamtbewegung, die Mittelstellung der Messeinrichtung oder des Werkzeuges innerhalb des Bewegungsspielraumes einer kürzeren Teilachse gilt und der Bewegungsspielraum von der Mittelstellung aus (also Sz / 2) immmer ausreichend sein sollte, um einen kompletten Vorzeichenwechsel der Geschwindigkeit (+Vbmax auf -Vbmax oder umgekehrt) ausführen zu können, ohne dass es zu einer Überschreitung der Grenzen des Bewegungsspielraumes (Sz) kommen würde.

Diese Situation wird jedoch in einem abhängigen Nebenanspruch behandelt, da die Formulierung im Hauptanspruch tatsächlich die allgemeingültigere ist, weil sie in jedem Fall gilt, auch wenn entsprechend eines zusätzlich erfindungsgemäß verbesserten Koordinationsverfahrens für die Achsbewegungen vorgesehen ist, dass die angestrebte Ruheposition der Messeinrichtung oder des Werkzeuges innerhalb des Bewegungsspielraumes einer kürzeren Teilachse, bei unbeschleunigter Gesamtbewegung in der jeweiligen Achse, außerhalb der Mittelstellung, in Richtung der Gesamtbewegung verschoben ist, und zwar vorzugsweise derart, dass die besagte Abweichung von der Mittelstellung im wesentlichen genau dann der maximal möglichen Auslenkung entspricht, wenn die besagte Gesamtbewegung der maximal nutzbaren Geschwindigkeit in der jeweiligen Achse entspricht.

Dieser, der gewöhnlichen Achskoordination zusätzlich überlagerte Einfluss, führt dazu, dass der Bewegungsspielraum einer kürzeren Teilachse immer gerade in der Richtung zur Verfügung steht, die für die voreilende Beschleunigung der kürzeren Teilachse entsprechend verhältnismäßig benötigt werden könnte, also entgegen der momentanen Gesamtbewegung, was im übrigen auch keinen wesentlichen zusätzlichen Aufwand gegenüber dem Verfahren des unbedingten Anstrebens der Mittelposition erfordert, sondern praktisch eine gleich aufwändige Alternative hierzu darstellt, jedoch mit dem großen Vorzug, dass wahlweise nur die Hälfte des Bewegungsspielraumes für die Zusatzachsen benötigt wird oder eine entsprechend höhere konstante Arbeitsgeschwindigkeit möglich ist, soweit auch die Zusatzachse entsprechend doppelt so schnell bewegbar ist.

Ein weiterer Vorteil dieser Erfindungsvariante ergibt sich, da somit die Geschwindigkeit der Basisachse nicht mehr temporär höher sein muss als die angestrebte Mess- oder Bearbeitungsgeschwindigkeit.

Vorzugsweise sollte berücksichtigt sein, dass als Bewegungsspielraum einer Zusatzachse zur Koordination der Achsen ein kleinerer Betrag als Bewegungsspielraum angenommen wird, als es der physischen Auslenkbarkeit entspricht, und zwar vorzugsweise mindestens in jeder Richtung um den Betrag reduziert, der maximal als Auslenkung der jeweiligen Achse, durch ein dem Sollsignal hinzuaddiertes korrigierendes Signal, beispielsweise aus einer Vorkompensation oder Gegenkopplung, zu erwartenden ist.

Die Ausführung der Erfindung ist möglich indem eine Maschine unmittelbar auf die in den ersten Ansprüchen ausgeführten Eigenschaften hin ausgelegt und optimiert ist, oder indem eine beliebige Maschine mit entsprechend redundant nutzbaren Achsen anhand der Verfahrensansprüche koordiniert wird, beispielsweise in einem entsprechenden Betriebsmodus einer CNC-Steuerung, die einen erfindungsgemäßen Betrieb bietet, in dem die konstante Bearbeitungsgeschwindigkeit auf den kleineren Wert, entweder etwa der Hälfte der maximalen Geschwindigkeit der Zusatzachsen oder passend zur Beschleunigung der Basisachsen im Verhältnis zum Bewegungsspielraum der Zusatzachsen, gesetzt wird.

Wenn beispielsweise eine Maschine mit überlagert betreibbaren parallel ausgerichteten Achsen auf einen Betrieb mit gleicher oder sogar höherer Höchstgeschwindigkeit der Basisachsen gegenüber den Zusatzachsen ausgelegt ist, so kann sie dennoch erfindungsgemäß betrieben werden, wenn während des erfindungsgemäßen Betriebes sichergestellt ist, dass die Zusatzachsen, gemäß der oben angegebenen Formeln, ausreichend schnell gegenüber der tatsächlich genutzten Mess- oder Bearbeitungsgeschwindigkeit sind.

Gewöhnlich würde dies bedeuten, dass ein erfindungsgemäßer Betrieb mit Mess- und Bearbeitungsgeschwindigkeiten bis zu etwa der Hälfte der maximalen Geschwindigkeit der Zusatzachsen möglich ist, wenn zugleich ein entsprechend ausreichender Bewegungsspielraum der Zusatzachsen sichergestellt ist.

Der entscheidende Unterschied zum bisherigen Stand der Technik ergibt sich daraus, dass erstmals die Eigenschaften einer Maschine oder einer entsprechenden Betriebsart offenbart werden, um für eine Messung oder Bearbeitung das Beschleunigungspotential hoch beschleunigter Teilachsen für jeden denkbaren Bewegungsablauf der Gesamtachsen im Bewegungsbereich der weniger beschleunigbaren Teilachsen, bis hin zur einer maximal geeigneten Mess- oder Bearbeitungsgeschwindigkeit, wirksam werden zu lassen, so dass ohne Einschränkungen über den gesamten Bewegungsbereich der Basisachsen eine kontinuierliche Bewegung mit der Beschleunigung der Zusatzachsen möglich ist.

Nach dem bisherigen veröffentlichten Stand der Technik war ein planbar funktionierender Betrieb nur derart möglich, dass die hoch beschleunigten Teilachsen zur Korrektur oder Kompensation der Bewegung der weniger beschleunigbaren Teilachsen genutzt werden konnten, was zwar auch eine Erhöhung der Bearbeitungsgeschwindigkeit und/oder der Genauigkeit bedeuten kann, jedoch nicht annähernd in dem Ausmaß und mit den wichtigen zusätzlichen Vorteilen, die sich mit erfindungsgemäß ausgelegten und betriebenen Zusatzachsen ergeben.

Während beispielsweise eine Kompensation nach dem Stand der Technik immer nur eine graduelle Beschleunigung, orientiert an der grundsätzlichen Beschleunigungsfähigkeit der Basisachsen, ermöglicht, erlaubt der von vornherein als überlagerte Bewegung geplante erfindungsgemäße Betrieb, insbesondere bei komplexen abzufahrenden Bahnkurven, eine Beschleunigung von Mess- und Bearbeitungsvorgängen gleich um Größenordnungen.

Dies wäre zwar grundsätzlich auch anhand einiger weiterer Dokumente aus dem bisherigen Stand der Technik beabsichtigt gewesen.

Jedoch wurden dort die erfindungsgemäßen Eigenschaften entsprechender Maschinen nicht ausreichend oder gar nicht offenbart, so dass bisher eine vollständige technische Konzeption für derartige Maschinen und ein entsprechender Betrieb auf Basis des veröffentlichten Standes der Technik nicht möglich war.

Bei der Koordination der Achsen derartiger Maschinen kann zum Teil auf den bekannten Stand der Technik für Maschinen, mit einer auf Kompensation zielenden Koordinationsstrategie zurückgegriffen werden, weshalb dies auch zum Stand der Technik so ausführlich dargestellt wurde und somit verdeutlicht, dass die Anwendung der Erfindung auch ohne großen Entwicklungsaufwand auf Basis vorhandener Maschinen umsetzbar ist, wenn auch eine speziell auf den ersten Hauptanspruch hin ausgelegte und optimierte Maschine erst das Potential der Erfindung vollständig erschließen kann.

Ausgehend von dem nächstliegenden bekannten Stand der Technik hierzu, der im US Patent 5 109 148 sehr ausführlich, insbesondere mit Bezug auf die Fig. 3(b) bis 6 sowie 8 und 9 ab Spalte 4 der Beschreibung, behandelt wird, ist es für eine erfindungsgemäße Koordination der Achsen, zusätzlich notwendig, ein dort als "smoothing filter" bezeichnetes, bezüglich der Geschwindigkeit tiefpassartig wirkendes Element nicht so auszulegen, dass es lediglich zu einer dort nur unklar definierten Entlastung des Antriebsstranges der Basisachsen kommt, sondern exakt erfindungsgemäß so auszulegen, dass bei gegebenem Bewegungsspielraum der jeweiligen Zusatzachse und vorgegebener Mess- oder Bearbeitungsgeschwindigkeit sich entsprechend die notwendige Beschleunigungsfähigkeit der Basisachsen ergibt, so dass die Zusatzachsen in keiner Phase der Messung oder Bearbeitung, zu einer Ansteuerung kommen können, die bei kontinuierlicher Messung oder Bearbeitung über die Grenzen des Bewegungsspielraumes der Zusatzachsen hinaus führen würde.

Dies ist natürlich nur bis zur tatsächlich physisch erreichbaren Beschleunigung der jeweiligen Basisachse möglich und sinnvoll.

Wenn dieses tiefpassartig wirkende Element oder eine andere Begrenzung innerhalb der Beschleunigungskontrolle der Basisachsen, verstellbar ausgelegt oder datentechnisch realisiert wird, kann es zusätzlich an die jeweils für eine Messung oder Bearbeitung erwünschte Geschwindigkeit angepasst werden, so dass ein möglichst großer Anteil der Beschleunigung und der Bewegung von den Zusatzachsen übernommen wird, was immer zugleich auch eine möglichst ruhige und belastungsarme Bewegung der Basisachsen, mit den entsprechend geminderten dynamischen Problemen, wie Verbiegungen und Schwingungen bedeutet.

Für die Berechnung entsprechender Werte können wiederum die eingangs genannten Gleichungen entsprechend umgestellt werden.

In der vereinfachten Form wäre dies also $B = 4 \times V_{bmax}^2 / S$, wobei B die Einstellung des besagten Begrenzungselementes für die Beschleunigung der Basisachse wäre, Vbmax die gewünschte Mess- oder Bearbeitungsgeschwindigkeit und S, der durch die jeweilige Mechanik gegebene Bewegungsspielraum der entsprechenden Zusatzachse.

Die erfindungsgemäße Auslegung der Zusatzachsen mit mindestens annähernd der doppelten Geschwindigkeit gegenüber der Arbeitsgeschwindigkeit ist dann ersichtlich eine Voraussetzung dafür, dass dies überhaupt in zumindest annähernd optimaler Weise möglich ist.

Bevorzugt werden auch immer solche Konfigurationen sein, die den Einfluss phasendrehender Elemente auf eine Gegenkopplung minimieren und von vornherein eine Vorkompensation von schon zu erwartenden Fehlern, beispielsweise anhand von Modellrechnungen, vornehmen, um insgesamt mit einer möglichst geringen Gegenkopplung auszukommen, so dass unvermeidbare Phasendrehungen weniger zu Schwingungen beitragen. Ideal wäre ein vollständige Vorwegkompensation aller auftretenden Soll/ist Differenzen, was jedoch in der gewünschten Genauigkeit meist nicht erreichbar sein wird.

Der Zwang zur zumindest zusätzlich rückgekoppelten Regelung wird also üblicherweise bestehen bleiben, wenn hohe Genauigkeit gefordert ist.

Es entspricht weiterhin, unabhängig von den durch die Erfindung eingeführten Neuheiten, dem Stand der Technik, dass mit den real ermittelten Soll/Ist Differenzen die Daten einer Vorwegkompensation laufend angepasst werden können, was die Schwingungsneigung einer geregelt betriebenen Achskonfiguration, wegen der geringeren notwendigen Gegenkopplung, weiter mindern kann. Ebenso kann der schwingungsfördernde Einfluss der Phasendrehung, sowohl durch entsprechende Vorwegkompensation als auch durch frequenzabhängig "rückdrehende" Kompensation im Gegenkopplungspfad, gemindert werden.

Als redundante translatorische Bewegungsmöglichkeit kann auch gelten kann, wenn rotatorisch oder parallelkinematisch wirkende Teilbewegungsvorrichtungen, neben ihren typischen Bewegungsmöglichkeiten oder ausschließlich, innerhalb eines anwendungsabhängig ausreichend kleinen Bewegungsbereiches, für eine redundante translatorische Bewegung einer Messeinrichtung oder eines Werkzeuges genutzt werden können.

Abschließend wird eine Steuerungsauslegung beschrieben, die besonders für eine erfindungsgemäße Koordination von Basis- und Zusatzachsen geeignet ist.

Hierzu wird in einem externen Computer oder der CNC-Steuerung zunächst ein Gesamtbewegungsprofil einer kontinuierlich abzufahrenden Bahn erstellt, unter Berücksichtigung der maximalen Beschleunigungsmöglichkeit der Zusatzachsen. Ein solches Profil besteht aus möglichst kurzen Bahnabschnitten, für die jeweils die Endpositionen, die Geschwindigkeiten und die notwendigen Beschleunigungen in den zu berücksichtigenden Achsen abgelegt sind.

Datentechnisch kann dies in der Form einer Liste, eines sogenannten Arrays erfolgen. Die notwendigen Beschleunigungen im Endpunkt des jeweiligen Abschnittes werden aus der Richtungsabweichung gegenüber dem nachfolgenden Abschnitt und der angestrebten Sollgeschwindigkeit ermittelt. Wenn sich in weinigstens einer Achse eine höhere Beschleunigung ergibt, als die jeweilige Zusatzachse leisten kann, wird die Beschleunigung auf dieses Maximum gesetzt und die Geschwindigkeiten werden entsprechend angepasst. Diese können, beispielsweise an einer Konturecke, auch den Wert 0 annehmen. Wird bei dieser Vorgehensweise ein Punkt erreicht, an dem die Geschwindigkeitswerte wieder ansteigen, ist also ein Minimum eindeutig überschritten worden, wird diese Position gemerkt und von hier aus die Daten in der Liste rückwärts an die errechneten Geschwindigkeiten angepasst, weil zu berücksichtigen ist, dass die im Vorwärtsdurchgang errechneten Geschwindigkeiten, von Abschnitt zu Abschnitt größere Veränderungen erfordern können, als tatsächlich mit der jeweiligen Beschleunigung erreichbar wäre, so dass sich diese Rückwärtsbearbeitung bis zu Abschnitten hinziehen kann, die für sich genommen keine Reduktion der Geschwindigkeit erfordert hätten. Dies ist analog der Situation eines Autofahrers der mit hoher Geschwindigkeit unterwegs ist und gegebenenfalls schon weit vor einer scharfen Kurve abbremsen muss.

Es handelt sich also um eine sogenannte "look ahead"-Verfahrensweise. Von dem besagten gemerkten Punkt aus, geht es mit der verminderten Geschwindigkeit jeweils zuzüglich des realisierbaren Beschleunigungsbeitrages wieder voran, bis zu einem Punkt an dem wiederum ein neues Minimum detektiert wurde, wonach sich der schon beschriebene Vorgang wiederholt. Dies wird bis zum Ende der abzufahrenden Bahn fortgeführt, bis das gesamte Profil erstellt wurde.

Die beschriebene Profilberechnung kann auch für einen ausreichend langen, jeweils aktuellen Abschnitt im Voraus, während einer Messung oder Bearbeitung, als in die laufende Bewegungsausführung integriertes "look ahead" stattfinden, so dass dieses Verfahren weder für die Arbeitsvorbereitung noch den Maschinenbediener bemerkbar ist.

Dem Fachmann wird sicherlich auffallen, dass diese Vorgehensweise bis zu diesem Punkt ebenso gut auch allein für eine Maschine ohne redundant wirksame Zusatzachsen anwendbar wäre.

Jedoch können nur bei einer erfindungsgemäß konzipierten Maschine oder beim Einsatz eines erfindungsgemäßen Verfahrens, hier problemlos die entsprechenden Grenzwerte der Zusatzachsen auch bei überlagert betreibbaren Achskonfigurationen verwendet werden.

Das so erstellte Profil kann nun unmittelbar zur Steuerung einer erfindungsgemäß aufgebauten oder arbeitenden Maschine benutzt werden, die in ihrer Regelung beispielsweise dem aus US Patent 5 109 148 bekannten Stand der Technik entspricht, wobei hier vorzugsweise zusätzlich jedoch die errechneten Beschleunigungswerte parallel zur Verbesserung des Regelverhaltens genutzt werden, um per direktem Vergleich mit Beschleunigungssensoren auf den Zusatzachsen eine besonders verzögerungsarme Gegenkopplung zu erreichen.

Alternativ können aber die Profildaten vor der unmittelbaren Steuerung nochmals aufgeteilt werden, in solche Daten die zur Ansteuerung der Zusatzachse bestimmt sind und solche für die jeweiligen Basisachsen. Vorzugsweise werden hier die Beschleunigungsdaten als Trennungskriterium genutzt, indem Bewegungsabschnitte mit höheren Beschleunigungen, als die maximale Beschleunigung der Basisachsen, den Zusatzachsen zugeteilt werden, wobei jedoch immer zu beachten ist, dass die Basisachsen schon jeweils mit bestimmten Positionen, Geschwindigkeiten und Beschleunigungen behaftet sind, die von den Gesamtwerten abzuziehen sind, so dass die Zusatzachsen die Differenzwerte erhalten. Hieraus ergeben sich dann zwei Profile die, exakt Listenpunktsynchron ausgeführt, wiederum die erwünschte Gesamtbewegung ergeben.

Dies würde in seiner Funktion weitgehend einer simulierten Frequenzweiche entsprechen, wie sie aus EP 594 699 B1 bekannt ist, wodurch schon Einzelheiten von alternativ denkbaren Regelungseinrichtungen des Standes der Technik in die Profildatenerzeugung integriert sind.

Ein Vorteil gegenüber einer einfachen simulierten oder realen Frequenzweiche und ähnlichen Einrichtungen, ergibt sich aus der Tatsache, dass alle drei Attribute der Sollbewegung für Steuerungs- und Regelungszwecke vorliegen, statt nur eines Attributes, beispielsweise nur der Position oder nur der Geschwindigkeit, was auch in Weiterentwicklung dieses Teiles des Standes der Technik, eine exaktere sowie schnellere Steuerung und Regelung ermöglicht.

Als entscheidender Vorteil der Erfindung erweist sich jedoch, dass bei erfindungsgemäßer Auslegung der Zusatzachsen oder auch bei einem Betrieb, von nach anderen Kriterien ausgelegten Achskonfigurationen, aber nach einem erfindungsgemäßen Verfahren, eine spezielle Berücksichtigung von besonderen Bahngeometrien weder auf manuelle Weise noch durch eine weitere automatische Verfahrensstufe notwendig ist und dennoch jeder Teil der Bahngeometrie mit der vollen Beschleunigung der Zusatzachsen durchfahren werden kann.

Sowohl die Art der Basisachsen, als auch der Zusatzachsen kann mechanisch sehr vielfältig realisiert sein.

Für Basisachsen werden gewöhnlich Linearantriebe, Hohlwellenmotore, Zahnstangentriebe oder Kugelgewindespindeln zum Einsatz kommen, während für die Zusatzachsen, je nach benötigtem Bewegungsspielraum und Größendimension der Anwendung neben Linearantrieben und möglichst direkt angetriebenen Kugelgewindespindeln auch piezoelektrisch, elektrodynamisch ("voice coils"), hydraulisch oder pneumatisch wirksame Antriebe verwendbar sein können.

Genauso ist auch der Einsatz von um eine Achse drehbarer oder parallelkinematisch bewegbarer Maschinenteile als entsprechend linear wirkende Zusatzachse innerhalb eines engen Winkelbereiches möglich, wie beispielsweise schwenkbare Laserschneidköpfe oder parallelkinematisch bewegbare Fräsköpfe.

Eine Mess- und Werkzeugmaschine kann erfindungsgemäß beispielsweise für den Schiff- oder Flugzeugbau zum Vermessen und Bearbeiten größter Bauteile in höchster Detailkomplexität vorteilhaft konzipiert werden, oder für eher alltägliche Dimensionen beispielsweise in der Größe von Autokarosserien, Waschmaschinen oder Platinen für elektronischen Schaltungen, bis hinunter in die Dimensionen von Zentimetern oder Bruchteilen von Millimetern, für die Abmessungen eines zu vermessenden oder zu bearbeitenden Werkstückes in der Mikrosystemtechnik, Mikroelektronik oder der Nanotechnologie.

Das Grundproblem - die Größe eines möglichst ununterteilten Arbeitsraumes im Verhältnis zu den zu berücksichtigenden Details - nimmt tendenziell immer mehr zu und damit zugleich auch der Bedarf für höchste Beschleunigungen bei möglichst kontinuierlicher Mess- und Bearbeitungsgeschwindigkeiten an komplexen Konturen und Strukturen und somit entsprechend komplexen Bahnkurven.

Bearbeitungsmethoden für die sich eine erfindungsgemäße Maschine besonders eignet, sind das Schweißen, Schneiden, Fräsen, Gravieren, Markieren, Aufbringen von komplexen Konturen und Strukturen auf eher flachen Materialien, wie Blechen, Kunststoffen, Glas, Keramiken, Holz und Textilien.

Ebenso ist das Rapid Prototyping eine geeignete Anwendung, insbesondere Verfahren in denen Schichten zugeschnitten, Material kleinräumig aufgetragen wird oder mit einem möglichst senkrecht zum Material ausgerichteten Energiestrahl gearbeitet werden muss, beispielsweise um eine möglichst gleichmäßigen und exakt reproduzierbaren Energieeintrag zu erhalten.

Ferner sind das exakte Bearbeiten kleinster Strukturen oder das präzise Auf- und Abtragen feinster Details mit hoher Geschwindigkeit genauso mögliche Anwendungen der vorliegenden Erfindung, wie auch das Messen und Kontrollieren in den genannten Bereichen, wobei diese nur als Beispiele zu verstehen sind und keine in irgend einer Weise abschließende Aufzählung von Anwendungsmöglichkeiten der Erfindung darstellen sollen.

Bevorzugte Ausführungsbeispiele der Erfindung sind in der Zeichnung schematisch dargestellt und werden nachfolgend mit Bezug zu den Figuren der Zeichnung näher erläutert. Es zeigt:

Fig. 1      eine Werkzeugmaschine mit einem in zwei Achsrichtungen bewegbaren Werkzeug und einer Zusatzachse;

Fig. 2      eine Werkzeugmaschine mit fünf Achsrichtungen;

Fig. 3a      eine stark schematisierte Darstellung einer Basisachse und Zusatzachse;

Fig. 3b      eine Darstellung des Bewegungsspielraums einer Zusatzachse;

Fig. 4a-c      Diagramme zur Erläuterung der erfindungsgemäßen Dimensionierung einer Zusatzachse;

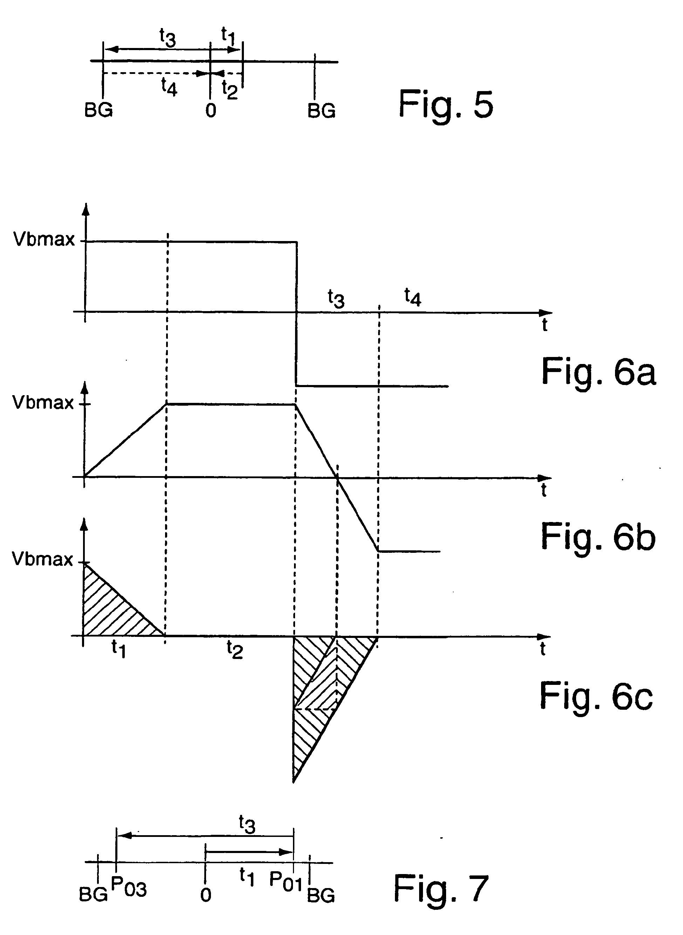

Fig. 5      ein Diagramm zur Erläuterung des benötigten Bewegungsspielraums der Zusatzachse;

Fig. 6a-c      Diagramme zur Erläuterung der efindungsgemäßen Dimensionierung einer Zusatzachse bei einer alternativen Betriebsart der Maschine;

Fig. 7      ein Diagramm zur Erläuterung des benötigten Bewegungsspielraums der Zusatzachse.

In der Fig. 1 ist eine Werkzeugmaschine 10 dargestellt, bei der ein Werkstück 11 ortsfest angeordnet ist. Ein Portal 12 ist entlang der Achsrichtung 13 bewegbar. An dem Portal 12 ist eine Einrichtung 14 angeordnet, an der wiederum ein Werkzeughalter 14' angeordnet ist, dei ein Werkzeug halten kann. Die Einrichtung 14 (und damit der Werkzeughalter 14' samt Werkzeug) ist in Achsrichtung 15 bewegbar. Der Werkzeughalter 14' ist bezüglich der Einrichtung 14 ebenfalls in Achsrichtung 13 beweglich.

Aus der Fig. 1 ist ersichtlich, dass der Werkzeughalter 14' (mit Werkzeug) eine geringere Masse aufweist als die Einrichtung 14, die als Schlitten bezeichnet werden kann. Das Portal 12 mit zugehörigen Antrieben stellt eine erste in Ausrichtung 13 wirkende Teilachse dar und wird als Basisachse bezeichnet, während der Werkzeughalter 14' mit zugehörigem Antrieb eine in Achsrichtung 13 wirkende zweite Teilachse, die Zusatzachse, darstellt. Die Basisachse hat einen größeren Bewegungsbereich und geringere Beschleunigung als die Zusatzachse. Die Bewegungen in den Achsenrichtungen 13, 15 werden durch eine Steuerung 16 gesteuert.

In der Fig. 2 ist eine Werkzeugmaschine 20 dargestellt, bei der ein Arm 21 entlang der Achsrichtung 22 bewegbar ist. Entlang dem Arm 21 ist eine Einrichtung 23 in Achsrichtung 24 bewegbar. Die Einrichtung 23 ist zusätzlich in Achsrichtung 25 bewegbar. Durch die Achsrichtungen 22, 24, 25 werden die X-, Y-, Z-Richtung eines kartesischen Koordinatensystems festgelegt. Ein Ausleger 26 ist in Achsrichtung 27 rotierbar. An dem Ausleger 26 ist ein Laserschneidkopf 28 als Werkzeug angeordnet, der wiederum in Achsrichtung 29 rotierbar ist.

In einem geringen Bewegungsausschnitt ist die Bewegung des Laserschneidkopfes 28 im Wesentlichen parallel zur Achsrichtung 22, so dass eine Bewegung des Kopfes 28 in einem Bereich eine translatorische Bewegung parallel zur Bewegung des Armes 21 in Achsrichtung 22 bewirken kann und daher der Laserschneidkopf 28 samt seinem Antrieb als (translatorische) Zusatzachse betrachtet werden kann.

In der Figur 3a ist nochmals stark schematisiert ein Schlitten 30 gezeigt, der relativ zur Führung 33 bewegbar ist und eine Basisachse bzw. einen Bestandteil einer solchen darstellt. Darauf ist eine Einrichtung 31 angeordnet, die eine Zusatzachse bzw. einen Bestandteil einer solchen darstellt. Sowohl der Schlitten 30 als auch die Einrichtung 31 können in Doppelpfeilrichtung 32 beschleunigt werden. Dabei kann der Schlitten 30 relativ zu der Führung 33 mit der Beschleunigung Bb (Beschleunigung der Basisachse) und die Einrichtung 31 relativ zum Schlitten 30 mit der Beschleunigung Bz (Beschleunigung der Zusatzachse) beschleunigt werden. Die maximale Sollgeschwindigkeit der Basisachse bzw. des Schlittens 30 beträgt Vbmax und die maximale Sollgeschwindigkeit der Zusatzachse bzw. der Einrichtung 31 beträgt 2 x Vbmax. Ein an der Einrichtung 31 befestigtes Werkzeug oder eine Messeinrichtung kann gegenüber einem Werkstück mindestens mit der Beschleunigung Bz beschleunigt werden. Die gestrichelten Linien BG stellen die Bereichsgrenzen des Bewegungsspielraums Sz der Zusatzachse dar.

Aus der Figur 3b ergibt sich, dass sich bei mittig an der Einrichtung 31 angeordnetem Werkzeug der Bewegungsspielraum Sz so darstellt, dass er nicht der Breite des Schlittens 30 entspricht. Im dargestellten Fall entspricht der Bewegungsspielraum Sz dem physikalischen Bewegungsspielraum. Für einige Ausführungen der Erfindung kann es jedoch vorteilhaft sein, einen geringeren Bewegungsspielraum Sz zu wählen, der kleiner ist als der physikalische Bewegungsspielraum Sz.

Die in den Figuren 4a- 4c gezeigten Diagramme dienen der Verdeutlichung des grundlegenden erfindungsgemäßen Verfahrens bzw. der Dimensionierung einer erfindungsgemäßen Vorrichtung. Idealerweise wird ein Werkzeug mit konstanter Geschwindigkeit relativ zu einem Werkstück bewegt. Dies wird veranschaulicht durch die konstante Geschwindigkeit Vbmax des Werkzeuges relativ zum Werkstück, wie sie in der Figur 4a dargestellt ist. Bei einem Richtungswechsel der Bewegung (am Anfang von t3) sollte idealerweise auf die betragsmäßig gleiche Geschwindigkeit -Vbmax gesprungen werden, die wieder konstant sein sollte.

In der Figur 4b ist ein realer Geschwindigkeitsverlauf einer Basisachse gezeigt. Während des Zeitintervalls $t_1$ beschleunigt die Basisachse auf ihre Sollgeschwindigkeit Vbmax. Die Fläche S entspricht der Strecke, die durch die Basisachse zurückgelegt wird, bis sie ihre Sollgeschwindigkeit Vbmax erreicht. Um eine konstante Geschwindigkeit des Werkzeugs relativ zum Werkstück zu erhalten, wie es in der Figur 4a dargestellt ist, muss während dieser Beschleunigungsphase der Basisachse die Zusatzachse die Beschleunigung der Basisachse kompensieren. Dies ist in der Figur 4c dargestellt. Da die Zusatzachse sehr leicht und dynamisch ist, kann nährungsweise angenommen werden, dass diese sprungartig d.h. quasi mit unendlich großer Beschleunigung, auf die Geschwindigkeit Vbmax springen kann. In dem Maße, wie die Geschwindigkeit der Basisachse zunimmt, muss die Geschwindigkeit der Zusatzachse bis zum Ende des Intervalls $t_1$ abnehmen. Somit beträgt die Fläche unterhalb der Kurve für die Geschwindigkeit der Zusatzachse ebenfalls S.

Normalerweise wird versucht, zu Beginn einer Bewegung die Zusatzachse in einer Mittelposition als Nullpunkt ihres Bewegungsbereichs Sz zu halten. Wie dies in der Figur 5 veranschaulicht ist, wird die Zusatzachse während des Zeitintervalls $t_1$ aus ihrer Mittelposition ausgelenkt. Diese Auslenkungsstrecke während des Zeitintervalls $t_1$ entspricht Vbmax$^2$ / 2Bb.

Während einer Bewegungsphase der Basisachse mit weitgehend konstanter Geschwindigkeit, kann durch eine gegenüber der maximalen Sollgeschwindigkeit Vbmax erhöhte Geschwindigkeit, deren Überhöhung gleichzeitig von der Zusatzachse kompensiert wird, die Zusatzachse zurück auf die Mittelposition gestellt werden. Dieser Vorgang findet während des Zeitintervalls t2 statt.

Am Ende der Bewegung mit konstanter Geschwindigkeit folgt in diesem Beispiel eine völlige Bewegungsumkehr, so dass die Zusatzachse sich relativ zur Basisachse zunächst mit 2 Vbmax in Gegenrichtung bewegen muss, um die anfängliche Bewegung der Basisachse mit Vbmax in der alten Richtung zu kompensieren. Während die Basisachse kontinuierlich abgebremst

und weiter in die negative Bewegungsrichtung beschleunigt wird, sinkt entsprechend die Geschwindigkeit der Zusatzachse. Die aus dem Diagramm ersichtliche Fläche für die Zusatzachse, während des Zeitintervalls t3, die ihrer Auslenkung entspricht, ist daher nun viermal so groß wie bei einer Bewegung aus dem Stillstand, so dass sich für diesen ungünstigsten Fall nun eine Auslenkung von 4 Vbmax$^2$/2Bb, also vereinfacht 2 Vbmax$^2$/Bb ergibt, die in beiden Bewegungsrichtungen zur Verfügung stehen muss, so dass sich als minimaler Bewegungsspielraum ergibt: Sz = 4 Vbmax$^2$/Bb.

Analog dem Intervall t2, wird auch während t4 ein Rückzug der Zusatzachse auf ihre Mittelposition angestrebt.

Eine effektivere Ausnutzung des zur Verfügung stehenden Bewegungsspielraumes einer Zusatzachse Sz ergibt sich durch eine Weiterbildung der Erfindung, entsprechend den Unteransprüchen 3 bis 5. Im Gegensatz zur zuvor illustrierten Variante der Erfindung erfolgt hier während der beschleunigungslosen bzw. -armen Abschnitte nicht ein Anstreben einer Nullposition in Mittelstellung der Zusatzachse, sondern die angestrebte Nullposition verschiebt sich je nach der momentanen Bewegungsgeschwindigkeit in Richtung dieser Bewegung. Dies wird analog zum vorherigen Beispiel in den Fig. 6a - 6c und 7 dargestellt, wobei Fig. 6a den Soll-Geschwindigkeitsverlauf, Fig. 6b den Teilgeschwindigkeitverlauf der Basiachse und 6c den der Zusatzachse darstellt. Fig. 7 zeigt die Bewegungen der Zusatzachse innerhalb ihrer Bewegungsgrenzen BG.

Im Gegensatz zu Fig. 5, in der jede hoch beschleunigte Bewegung der Zusatzachse immer von 0 ausgeht, verschiebt sich dieser Ausgangspunkt in Fig. 7 immer in Richtung der schon bestehenden Bewegung, hier dargestellt durch die

Punkte P01 und P03, die nach den Zeitintervallen t1 und t3 als Ausgangspunkte für hoch beschleunigte Bewegungen der Zusatzachsen dienen.

Es wird deutlich, dass derart eine verbesserte Ausnutzung des Bewegungsspielraumes Sz ermöglicht wird, was sowohl eine Verkürzung von Sz oder auch eine höhere nutzbare Geschwindigkeit ermöglicht.

Zugleich werden auch die Rückzugsbewegung der Zusatzachsen auf die derart bestimmten Ruhepunkte minimiert (siehe Fig. 6c im Vergleich zu 4c) und für die Basisachsen muss auch keine Geschwindigkeitsreserve jenseits von Vbmax mehr vorgesehen sein, wie aus Fig. 6b hervorgeht.

## Patentansprüche

1. Mess- oder Werkzeugmaschine (10,20) mit redundanten translatorisch wirkenden
Achsen (15,14',22,24,25,27,29) zur kontinuierlichen Bewegung an komplexen Bahnkurven
wobei die redundanten translatorisch wirksamen Achsen, linear bewegbare Teile (14,14') einer Gesamtbewegungsvorrichtung, zur mindestens zweidimensionalen
Gesamtbewegung von Messeinrichtungen oder Werkzeugen, relativ zu einem mit beliebigen Verfahren abzutastenden oder zu bearbeitenden Mess- oder
Bearbeitungsgut bilden,
wobei als redundante translatorische Bewegungsmöglichkeit auch gelten kann,
wenn rotatorisch oder paraffelkinematisch wirkende Teilbewegungsvorrchtungen (23,26,28),
innherhalb eines anwendungsabhängigen Bewegungsbereiches, für eine redundante translatorische Bewegung einer Messeinrichtung oder eines Werkzeuges genutzt werden können,
wobei die jeweils über eine längere Strecke bewegbaren Teilachsen, hier Basisachsen (32) genannt, eine niedrig beschleunigte Teilbewegung, über den gesamten Mess- oder Bearbeitungsraum ermöglichen und die jeweils über eine kürzere Strecke bewegbaren Teilachsen, hier Zusatzachsen (Sz) genannt, nur die Bewegungsanteile einer Gesamtbewegung ausführen, die eine Beschleunigung jenseits eines für die Basisachsen festgestellten oder festgesetzten Maximums erfordern, wobei die Beschleunigung der Zusatzachsen, in jeder mit redundant wirkenden Teilachsen arbeitenden Maschinenachse, die Beschleunigungsmöglichkeit während der gesamten Bewegung, auch bei weitgehend konstanter Mess- oder Bearbeitungsgeschwindigkeit, entlang einer beliebig komplexen Bahnkurve bestimmt, **dadurch gekennzeichnet, dass** der Bewegungsspielraum der jeweiligen Zusatzachse (Sz), die angestrebte konstante Bewegungsgeschwindigkeit einer Messeinrichtungoder eines Werkzeuges gegenüber dem Mess- oder Bearbeitungsgut (Vbmax) und die besagte maximale Beschleunigung einer Basisachse (Bb) derart aufeinander abgestimmt sind, dass der Bewegungsspielraum der Zusatzachse (Sz) als Strecke ausreicht, um bei besagter angestrebt konstanter Geschwindigkeit (Vbmax) mit der besagten maximalen Beschleunigung der Basisachse (Bb) mindestens einen vollständigen Vorzeichenwechsel in der Bewegungsgeschwindigkeit (Vbmax) auszuführen und die maximale Bewegungsgeschwindigkeit der Zusatzachse mindestens doppelt so hoch ist, wie die angestrebte konstante Geschwindigkeit(Vbmax), wobei die angestrebte Ruheposition der Messeinrichtung oder des Werkzeuges innerhalb des Bewegungsspielraumes einer Zusatzachse bei unbeschleunigter Gesamtbewegung in der jeweiligen Gesamtachse von einer Mittelstellung ausgehend zusätzlich in Richtung der Gesamtbewegung verschoben ist.

2. Maschine gemäß Anspruch 1,
**dadurch gekennzeichnet, dass** der Betrag der Abweichung von der besagten Mittelstellung von der Geschwindigkeit der besagten Gesamtbewegung in der jeweiligen Achse abhängig ist.

3. Maschine gemäß Anspruch 2,
**dadurch gekennzeichnet, dass** die besagte Abweichung von der Mittelstellung der maximal möglichen Auslenkung entspricht, wenn die besagte
Geschwindigkeit der Gesamtbewegung der maximal angestrebten Geschwindigkeit (Vbmax) in der jeweiligen Achse entspricht.

4. Maschine gemäß einem der vorhergehenden Ansprüche,
**dadurch gekennzeichnet, dass** als Bewegungsspielraum einer Zusatzachse (Sz) zur Koordination der Achsen ein kleinerer Betrag angenommen wird, als es der physischen Auslenkbarkeit entspricht.

5. Maschine gemäß Anspruch 4,
   **dadurch gekennzeichnet, dass** die besagte Verkleinerung des Bewegungsspielraumes in jeder Richtung, also zwei mal, der maximalen Auslenkung der jeweiligen Achse durch ein dem Sollsignal hinzuaddiertes korrigierendes Signal entspricht.

6. Maschine gemäß Anspruch 5,
   **dadurch gekennzeichnet, dass** das besagte dem Sollsignal hinzuaddierte korrigierende Signal durch eine Vorkompensation oder Gegenkopplung generiert wird.

7. Verfahren für Mess- oder Werkzeugmaschine (10,20) mit redundanten translatorisch wirkenden Tellachsen (15,14', 22,24,25,27,29) zur kontinuierlichen Bewegung an komplexen Bahnkurven
   wobei die redundanten translatorisch wirksamen Teilachsen, linear bewegbare Teile (14,14') einer Gesamtbewegungsvorrichtung, zur mindestens zweidimensionalen Gesamtbewegung von Messeinrichtungen oder Werkzeugen, relativ zu einem mit beliebigen Verfahren abzutastenden oder zu bearbeitenden Mess- oder Bearbeitungsgut bilden, wobei als redundante translatorische Bewegungsm8güchkeit auch gelten kann,
   wenn rotatorisch oder parallelkinematisch wirkende Teilbewegungsvorrichtungen (23,26,28),
   innerhalb eines anwendungsabhängig ausreichend kleinen Bewegungsbereiches, für eine redundante translatorische Bewegung einer Messeinrichtung oder eines Werkzeuges genutzt werden können,
   wobei die jeweils über eine längere Strecke bewegbaren Teilachsen, hier Basisachsen (32) genannt, eine niedrig beschleunigte Teilbewegung , über den gesamten Mess- oder Bearbeitungsraum ermöglichen
   und die jeweils über eine kürzere Strecke bewegbaren Teilachsen, hier Zusatzachsen (52) genannt, nur die Bewegungsantelle einer Gesamtbewegung ausführen,
   die eine Beschleunigung jenseits eines für die Basisachsen festgestellten oder
   festgesetzten Maximums erfordern, wobei die Beschleunigung der Zusatzachsen, in jeder mit redundant wirkenden Teilachsen arbeitenden Maschinenachse, die Beschieunigungsmöglichkeit während der gesamten Bewegung, auch bei konstanter Mess- oder Bearbeitungsgeschwindigkeit, entlang einer beliebig komplexen Bahnkurve bestimmt,
   **dadurch gekennzeichnet; dass** der Bewegungsspielraum der jewellgen Zusatzachse (Sz), die angestrebte konstante Bewegungsgeschwindigkeit einer Messeinrichtung oder eines Werkzeuges gegenüber dem Mess- oder Bearbeitungsgut (Vbmax) und die besagte maximale Beschleunigung einer Basisachse (Bb) derart bei der Bestimmung eines noch offenen Wertes, gewöhnlich Vbmax, genutzt werden, dass der Bewegungsspielraum der Zusatzachsen (Sz) als Strecke ausreicht, um bei besagter angestrebt konstanter Geschwindigkeit (Vbmax) mit der besagten maximalen Beschleunigung der Basisachse (Bb) mindestens einen vollständigen Vorzeichenwechsel in der Bewegungsgeschwindigkeit (Vbamax) auszuführen und die maximal angestrebte Geschwindigkeit (Vbmax) nicht höher ist, als die Hälfte der maximalen Bewegungsgeschwindigkeit der jeweiligen Zusatzachse; wobei die angestrebte Ruheposition der Messeinrichtung oder des Werkzeuges innerhalb des Bewegungsspielraumes einer Zusatzachse bei unbeschleunigter Gesamtbewegung in der jeweiligen Achse, außerhalb der Mittelstellung, in Richtung der Gesamtbewegung verschoben ist.

8. Verfahren gemäß Anspruch 7,
   **dadurch gekennzeichnet, dass** der Betrag der Abweichung von der besagten Mittelstellung von der Geschwindigkeit der besagten Gesamtbewegung in der jeweiligen Achse abhängig ist.

9. Verfahren gemäß Anspruch 8,
   **dadurch gekennzeichnet, dass** die besagte Abweichung von der Mittelstellung der maximal möglichen Auslenkung entspricht, wenn die besagte
   Geschwindigkeit der Gesamtbewegung der maximal angestrebten Geschwindigkeit (Vbmax) in der jeweiligen Achse entspricht.

10. Verfahren gemäß einem der vorhergehenden Ansprüche 7 bis 9,
    **dadurch gekennzeichnet, dass** als Bewegungsspielraum einer Zusatzachse (Sz) zur Koordination der Achsen ein kleinerer Betrag angenommen wird, als es der physischen Auslenkbarkeit entspricht.

11. Verfahren gemäß Anspruch 10,
    **dadurch gekennzeichnet, dass** die besagte Verkleinerung des Bewegungsspielraumes mindestens in jeder Richtung, also zwei mal, der maximalen Auslenkung der jeweiligen Achse durch ein dem Sollsignal hinzuaddiertes korrigierendes Signal entspricht.

**12.** Verfahren gemäß Anspruch 11,
**dadurch gekennzeichnet, dass** das besagte dem Sollsignal hinzuaddierte korrigierende Signal durch eine Vorkompensation oder Gegenkopplung generiert wird.

**13.** Mess- oder Werkzeugmaschine nach einem der vorhergehenden Ansprüche 1 - 6, mit zumindest einer Basisachse und einer dazu zumindest abschnittsweise redundanten translatorisch wirkenden Zusatzachse zur kontinuierlichen Bewegung einer Messeinrichtung oder eines Werkzeugs relativ zu einem Mess- oder Bearbeitungsgut, wobei die Messeinrichtung bzw. das Werkzeug durch die Basisachse eine größere Strecke mit einer geringeren Beschleunigung bewegbar ist als durch die Zusatzachse
**dadurch gekennzeichnet, dass**
für eine angestrebte konstante Bewegungsgeschwindigkeit einer Messeinrichtung oder eines Werkzeugs gegenüber dem Mess- oder Bearbeitungsgut Vbmax die Maschine derart ausgelegt ist, dass

a) der Bewegungsspielraum Sz der Zusatzachse beträgt: $Sz \geq 2Vbmax^2/Bb$, wobei Bb
die Beschleunigung der Basisachse ist;
und/oder
b) $Vzmax \geq 2Vbmax$, wobei Vzmax die Maximalgeschwindigkeit der Zusatzachse ist,
und
c) die angestrebte Ruheposition der Messeinrichtung oder des Werkzeuges innerhalb des Bewegungsspielraumes einer Zusatzachse bei unbeschleunigter Gesamtbewegung in der jeweiligen Gesamtachse von einer Mittelstellung ausgehend zusätzlich in Richtung der Gesamtbewegung verschoben ist.

**14.** Verfahren zum Betrieb einer Mess- oder Werkzeugmaschine nach einem der vorhergehenden Ansprüche 7 - 12, bei dem eine Messeinrichtung oder ein Werkzeug über zumindest eine Basisachse und eine dazu zumindest abschnittsweise redundanten translatorisch wirkende Zusatzachse kontinuierlich relativ zu einem Mess- oder Bearbeitungsgut bewegt wird, wobei die Messeinrichtung bzw. das Werkzeug durch die Basisachse eine größere Strecke mit einer geringeren Beschleunigung bewegbar ist als durch die Zusatzachse
**dadurch gekennzeichnet, dass**
bei vorgegebenem Bewegungsspielraum Sz der Zusatzachse eine angestrebte konstante Bewegungsgeschwindigkeit einer Messeinrichtung oder eines Werkzeugs gegenüber dem Mess- oder Bearbeitungsgut $Vbmax \leq SQRT$ $(Sz \ x \ Bb \ / \ 2)$ und/oder $Vbmax \leq Vzmax$ eingestellt wird, wobei Vzmax die Maximalgeschwindigkeit der Zusatzachse ist und die angestrebte Ruheposition der Messeinrichtung oder des Werkzeuges innerhalb des Bewegungsspielraumes einer Zusatzachse bei unbeschleunigter Gesamtbewegung in der jeweiligen Achse, außerhalb der Mittelstellung, in Richtung der Gesamtbewegung verschoben ist.

**15.** Verfahren nach Anspruch 14, **dadurch gekennzeichnet, dass** unter Berücksichtigung der maximalen Beschleunigung der Zusatzachsen ein Gesamtbewegungsprofil einer kontinuierlich abzufahrenden Bahn erstellt wird.

**16.** Verfahren nach Anspruch 15, **dadurch gekennzeichnet, dass** das Gesamtbewegungsprofil aus Bahnabschnitten zusammen gesetzt wird, für die die Endpositionen, die Geschwindigkeiten und notwendigen Beschleunigungen in den zu berücksichtigenden Achsen abgelegt werden.

**17.** Verfahren nach einer der Ansprüche 15 oder 16, **dadurch gekennzeichnet, dass** das Gesamtbewegungsprofil in einem vorausschauenden Verfahren, look-ahead, erstellt wird.

**Claims**

**1.** A measuring machine or machine tool (10, 20) having redundant axes (15, 14', 22, 24, 25, 27, 29) having a translatory action for continuous movement along complex paths,
wherein the redundant axes having a translatory action form linearly movable parts (14, 14') of a total movement device, for at least two-dimensional total movement of measuring devices or tools relative to a material to be scanned or to be processed with any desired methods,
wherein a possible redundant translatory movement is also considered to be when rotary or parallel kinematically acting partial movement devices (23, 26, 28), within an application-dependent movement range, can be used for a redundant translatory movement of a measuring device or a tool,
wherein the partial axes each movable over a relatively long distance, called base axes (32) here, permit a slowly accelerated partial movement across the entire measuring or processing space, and the partial axes each movable over a relatively short distance, called additional axes (Sz) here, perform only the movement components of a total movement that require an acceleration beyond a maximum established or stipulated for the base axes, wherein the acceleration of the additional axes, in each machine axis working with redundantly acting partial axes, determines the acceleration potential during the total movement, even at largely constant measuring or processing speed, along any desired complex path,

**characterised in that**

the movement range of the particular additional axis (Sz), the desired constant speed of movement of a measuring device or of a tool with respect to the material to be measured or processed (Vbmax) and the said maximum acceleration of a base axis (Bb) are co-ordinated with one another in such a way that the movement range of the additional axis (Sz) is sufficient as a distance, in order, at the said desired constant speed (Vbmax) with the said maximum acceleration of the base axis (Bb), for at least a complete change of sign in the speed of movement (Vbmax) to be performed and the maximum speed of movement of the additional axis is at least twice as high as the desired constant speed (Vbmax), wherein the desired position of rest of the measuring device or the tool within the movement range of an additional axis during an unaccelerated total movement in the particular overall axis, starting from a middle position, is displaced additionally in the direction of the total movement.

2. A method according to claim 1,
**characterised in that**
the amount of the deviation from the said middle position is dependent on the speed of the said total movement in the particular axis.

3. A method according to claim 2,
**characterised in that**
the said deviation from the middle position corresponds to the maximum possible displacement when the said speed of the total movement corresponds to the maximum desired speed (Vbmax) in the particular axis.

4. A method according to any one of the preceding claims,
**characterised in that**
an amount smaller than corresponding to the physical displaceability is assumed as the movement range of an additional axis (Sz) for co-ordination of the axes.

5. A method according to claim 4,
**characterised in that**
the said decrease in the movement range in each direction, i.e. twice, corresponds to the maximum displacement of the particular axis by a correcting signal to be added to the desired signal.

6. A method according to claim 5,
**characterised in that**
the said correcting signal to be added to the desired signal is generated by a pre-compensation or counter-coupling means.

7. A method for a measuring machine or machine tool (10, 20) having redundant axes (15, 14', 22, 24, 25, 27, 29) having a translatory action for continuous movement along complex paths,
wherein the redundant axles having a translatory action form linearly movable parts (14, 14') of a total movement device, for at least two-dimensional total movement of measuring devices or tools relative to a material to be scanned or to be processed with any desired methods,
wherein a possible redundant translatory movement is also considered to be when rotatory or parallel kinematically acting partial movement devices (23, 26, 28), within an application-dependent sufficiently small movement range, can be used for a redundant translatory movement of a measuring device or a tool,
wherein the partial axles each movable over a relatively long distance, called base axes (32) here, permit a slowly accelerated partial movement across the entire measuring or processing space,
and the partial axes each movable over a relatively short distance, called additional axes (Sz) here, perform only the movement components of a total movement that require an acceleration beyond a maximum established or stipulated for the base axes, wherein the acceleration of the additional axes, in each machine axis working with redundantly acting partial axes, determines the acceleration potential during the total movement, even at largely constant measuring or processing speed, along any desired complex path,
**characterised in that**
the movement range of the particular additional axis (Sz), the desired constant speed of movement of a measuring device or a tool with respect to the material to be measured or processed (Vbmax) and the said maximum acceleration of a base axis (Bb) are used, on determining a still open value, usually Vbmax, in such a way that the movement range of the additional axes (Sz) is sufficient as a distance for at least a complete change of sign in the speed of movement (Vbmax) to be performed at the said desired constant speed (Vbmax) with the said maximum acceleration of the base axis (Bb), and the maximum desired speed (Vbmax) is not higher than half the maximum speed of movement of the particular additional axis, wherein the desired position of rest of the measuring device or the tool within the movement range of an additional axis during an unaccelerated total movement in the particular axis, outside the middle position, is displaced in the direction of the total movement.

8. A method according to claim 7,
**characterised in that**
the amount of the deviation from the said middle position is dependent on the speed of the said total movement in the particular axis.

9. A method according to claim 8,
**characterised in that**
the said deviation from the middle position corresponds to the maximum possible displacement when the said speed of the total movement corresponds to the maximum desired speed (Vbmax) in the particular axis.

10. A method according to any one of the preceding claims 7 to 9,
**characterised in that**
an amount smaller than that corresponding to the physical displaceability is assumed as the movement range of an additional axis (Sz) for co-ordination of the axes.

11. A method according to claim 10,
**characterised in that**
the said decrease in the movement range, at least in each direction, i.e. twice, corresponds to the maximum displacement of the particular axis by a correcting signal to be added to the desired signal.

12. A method according to claim 11,
**characterised in that**,
the said correcting signal to be added to the desired signal is generated by a pre-compensation or counter-coupling means.

13. A measuring machine or machine tool according to any one of the preceding claims 1 to 6, having at least one base axis and a redundant additional axis having a translatory action at least in sections with respect to the base axis for continuous movement of a measuring device or a tool relative to a material to be measured or processed, the measuring device or the tool being movable by the base axis for a larger distance at a lower acceleration than by the additional axis,
**characterised in that**
for a desired constant speed of movement of a measuring device or a tool with respect to the material to be measured or processed, the machine is designed such that

a) the movement range Sz of the additional axis amounts to $Sz \geq 2Vbmax^2/Bb$, where Bb is the acceleration of the base axis;
and/or
b) $Vzmax \geq 2Vbmax$, where Vzmax is the maximum speed of the additional axis,
and
c) the desired position of rest of the measuring device or the tool within the movement range of an additional axis during an unaccelerated total movement in the particular overall axis, starting from a middle position, is additionally displaced the direction of the total movement.

14. A method for operation of a measuring machine or machine tool according to one of the preceding claims 7 to 12, in which a measuring device or a tool is moved relative to a material to be measured or processed via at least one base axis and via a redundant additional axis having a translatory action at least in sections with respect to the base axis, wherein the measuring device or the tool is movable by the base axis for a larger distance at a lower acceleration than by the additional axis,
**characterised in that**

at a predetermined movement range Sz of the additional axis a desired constant movement speed of a measuring device or of a tool with respect to the material to be processed or measured Vbmax ≤ SQRT(Sz x Bb/2) and/or Vbmax ≤ Vzmax is set, wherein Vzmax is the maximum speed of the additional axis and the desired position of rest of the measuring device or the tool within the movement range of an additional axis at unaccelerated total movement in the particular axis, outside the middle position, is displaced in the direction of the total movement.

15. A method according to claim 14, **characterised in that** taking into consideration the maximum acceleration of the additional axes a total movement profile of a continuous path to be covered is produced.

16. A method according to claim 15, **characterised in that** the total movement profile is made up of path sections for which the end positions, the speeds and necessary accelerations are stored in the axes to be considered.

17. A method according to one of claims 15 and 16, **characterised in that** the total movement profile is prepared in a look-ahead process.

## Revendications

1. Machine de mesure ou machine-outil (10, 20) à axes redondants (15, 14', 22, 24, 25, 27, 29) opérant en translation, en vue du mouvement continu sur des trajectoires complexes,
   lesdits axes redondants, opérant en translation, matérialisant des parties (14, 14') linéairement mobiles d'un dispositif de mouvement intégral affecté au mouvement intégral, au moins bidimensionnel, de systèmes de mesure ou d'outils par rapport à un objet à mesurer ou à usiner, devant être exploré ou usiné par de quelconques procédés, une faculté redondante de mouvement translatoire pouvant également être réputée offerte lorsque des dispositifs (23, 26, 28) de mouvement partiel, agissant en mode rotatif ou avec cinématique parallèle, peuvent être utilisés dans les limites d'une plage de mouvements tributaire de l'application, en vue d'un mouvement translatoire redondant d'un système de mesure ou d'un outil,
   les axes partiels désignés par « axes fondamentaux » (32) dans le présent contexte, respectivement mobiles sur un trajet de longueur supérieure, autorisant un mouvement partiel à faible accélération sur la totalité de l'espace de mesure ou d'usinage, et les axes partiels désignés par « axes additionnels » (Sz) dans le présent contexte, respectivement mobiles sur un trajet de longueur moindre, exécutant uniquement les fractions d'un mouvement intégral qui réclament une accélération au-delà d'un maximum fermement établi ou fermement instauré pour lesdits axes fondamentaux, l'accélération des axes additionnels, suivant chaque axe de machine opérant avec des axes partiels à action redondante, déterminant la possibilité d'accélération au cours du mouvement intégral le long de n'importe quelle trajectoire complexe, également en présence d'une vitesse de mesurage ou d'usinage largement constante, **caractérisée par le fait que** la latitude de mouvement de l'axe additionnel (Sz) considéré, la vitesse de mouvement constante recherchée (Vbmax) d'un système de mesure ou d'un outil par rapport à l'objet mesuré ou usiné, et l'accélération maximale précitée (Bb) d'un axe fondamental, sont mutuellement coordonnées de telle sorte que ladite latitude de mouvement dudit axe additionnel (Sz) soit suffisante, en tant que trajet, pour induire au moins un changement de signe complet dans la vitesse de mouvement (Vbmax) avec ladite accélération maximale (Bb) dudit axe fondamental en présence de ladite vitesse constante recherchée (Vbmax), et que ladite vitesse maximale de mouvement dudit axe additionnel représente au moins le double de ladite vitesse constante recherchée (Vbmax), sachant que la position de repos recherchée du système de mesure ou de l'outil est additionnellement décalée dans la direction du mouvement intégral à partir d'une position centrale, dans les limites de la latitude de mouvement d'un axe additionnel, dans le cas d'un mouvement intégral non accéléré suivant l'axe global considéré.

2. Machine selon la revendication 1,
   **caractérisée par le fait que** la valeur de l'écart, vis-à-vis de la position centrale précitée, est tributaire de la vitesse du mouvement intégral susmentionné, suivant l'axe considéré.

3. Machine selon la revendication 2,
   **caractérisée par le fait que** l'écart susmentionné, vis-à-vis de la position centrale, correspond à l'excursion maximale possible lorsque la vitesse précitée du mouvement intégral correspond, suivant l'axe considéré, à la vitesse maximale recherchée (Vbmax).

4. Machine selon l'une des revendications précédentes,
   **caractérisée par le fait qu'**une valeur, admise en tant que latitude de mouvement d'un axe additionnel (Sz) en vue de la coordination des axes, est plus petite que celle correspondant à la faculté d'excursion physique.

**5.** Machine selon la revendication 4,
**caractérisée par le fait que** la diminution précitée de la latitude de mouvement correspond dans chaque direction, c'est-à-dire deux fois, à l'excursion maximale de l'axe considéré, sous l'action d'un signal correcteur ajouté au signal de consigne.

**6.** Machine selon la revendication 5,
**caractérisée par le fait que** le signal correcteur précité, ajouté au signal de consigne, est généré par une compensation préalable ou par un contre-couplage.

**7.** Procédé destiné à des machines de mesure ou des machines-outils (10, 20) à axes redondants (15, 14', 22, 24, 25, 27, 29) opérant en translation, en vue du mouvement continu sur des trajectoires complexes,
les axes partiels redondants, opérant en translation, matérialisant des parties (14, 14') linéairement mobiles d'un dispositif de mouvement intégral affecté au mouvement intégral, au moins bidimensionnel, de systèmes de mesure ou d'outils par rapport à un objet mesuré ou usiné, devant être exploré ou usiné par de quelconques procédés,
une faculté redondante de mouvement translatoire pouvant également être réputée offerte lorsque des dispositifs (23, 26, 28) de mouvement partiel, agissant en mode rotatif ou avec cinématique parallèle, peuvent être utilisés dans les limites d'une plage de mouvements suffisamment petite, en fonction de l'application, en vue d'un mouvement translatoire redondant d'un système de mesure ou d'un outil,
les axes partiels désignés par « axes fondamentaux » (32) dans le présent contexte, respectivement mobiles sur un trajet de longueur supérieure, autorisant un mouvement partiel à faible accélération sur la totalité de l'espace de mesure ou d'usinage,
et les axes partiels désignés par « axes additionnels » (Sz) dans le présent contexte, respectivement mobiles sur un trajet de longueur moindre, exécutant uniquement les fractions d'un mouvement intégral qui réclament une accélération au-delà d'un maximum fermement établi ou fermement instauré pour lesdits axes fondamentaux, l'accélération des axes additionnels, suivant chaque axe de machine opérant avec des axes partiels à action redondante, déterminant la possibilité d'accélération au cours du mouvement intégral le long de n'importe quelle trajectoire complexe, également en présence d'une vitesse de mesurage ou d'usinage constante,
**caractérisé par le fait que** la latitude de mouvement de l'axe additionnel (Sz) considéré, la vitesse de mouvement constante recherchée (Vbmax) d'un système de mesure ou d'un outil par rapport à l'objet mesuré ou usiné, et l'accélération maximale précitée (Bb) d'un axe fondamental, sont utilisées, lors de la détermination d'une valeur encore patente se présentant habituellement comme Vbmax, de telle sorte que ladite latitude de mouvement des axes additionnels (Sz) soit suffisante, en tant que trajet, pour induire au moins un changement de signe complet dans la vitesse de mouvement (Vbmax) avec ladite accélération maximale (Bb) dudit axe fondamental en présence de ladite vitesse constante recherchée (Vbmax), et que ladite vitesse maximale recherchée (Vbmax) ne soit pas supérieure à la moitié de la vitesse maximale de mouvement de l'axe additionnel considéré, sachant que la position de repos recherchée du système de mesure ou de l'outil est décalée dans la direction du mouvement intégral en dehors de la position centrale, dans les limites de la latitude de mouvement d'un axe additionnel, dans le cas d'un mouvement intégral non accéléré suivant l'axe considéré.

**8.** Procédé selon la revendication 7,
**caractérisé par le fait que** la valeur de l'écart, vis-à-vis de la position centrale précitée, est tributaire de la vitesse du mouvement intégral susmentionné, suivant l'axe considéré.

**9.** Procédé selon la revendication 8,
**caractérisé par le fait que** l'écart susmentionné, vis-à-vis de la position centrale, correspond à l'excursion maximale possible lorsque la vitesse précitée du mouvement intégral correspond, suivant l'axe considéré, à la vitesse maximale recherchée (Vbmax).

**10.** Procédé selon l'une des revendications précédentes 7 à 9,
**caractérisé par le fait qu'**une valeur, admise en tant que latitude de mouvement d'un axe additionnel (Sz) en vue de la coordination des axes, est plus petite que celle correspondant à la faculté d'excursion physique.

**11.** Procédé selon la revendication 10,
**caractérisé par le fait que** la diminution précitée de la latitude de mouvement correspond au moins dans chaque direction, c'est-à-dire deux fois, à l'excursion maximale de l'axe considéré, sous l'action d'un signal correcteur ajouté au signal de consigne.

**12.** Procédé selon la revendication 11,

**caractérisé par le fait que** le signal correcteur précité, ajouté au signal de consigne, est généré par une compensation préalable ou par un contre-couplage.

13. Machine de mesure ou machine-outil selon l'une des revendications précédentes 1-6, comprenant au moins un axe fondamental et un axe additionnel opérant en translation et présentant, au moins par zones, une redondance par rapport à l'axe précité, en vue du mouvement continu d'un système de mesure ou d'un outil vis-à-vis d'un objet à mesurer ou à usiner, ledit système de mesure ou ledit outil parcourant respectivement, suivant ledit axe fondamental, un trajet plus grand et à plus faible accélération que suivant ledit axe additionnel,
**caractérisée par le fait que**,
pour une vitesse de mouvement constante recherchée (Vbmax) d'un système de mesure ou d'un outil, par rapport à l'objet mesuré ou usiné, ladite machine est conçue de telle sorte que

a) la latitude de mouvement (Sz) de l'axe additionnel soit exprimée par : $Sz >= 2Vbmax^2/Bb$, Bb étant l'accélération de l'axe fondamental ;
et/ou
b) $Vzmax >= 2Vbmax$, Vzmax étant la vitesse maximale de l'axe additionnel,
et
c) la position de repos recherchée du système de mesure ou de l'outil soit additionnellement décalée dans la direction du mouvement intégral à partir d'une position centrale, dans les limites de la latitude de mouvement d'un axe additionnel, dans le cas d'un mouvement intégral non accéléré suivant l'axe global considéré.

14. Procédé selon l'une des revendications précédentes 7-12, dévolu à l'actionnement d'une machine de mesure ou d'une machine-outil et dans lequel un système de mesure ou un outil est animé d'un mouvement continu, vis-à-vis d'un objet à mesurer ou à usiner, par l'intermédiaire d'au moins un axe fondamental et un axe additionnel opérant en translation et présentant, au moins par zones, une redondance par rapport à l'axe précité, ledit système de mesure ou ledit outil parcourant respectivement, suivant ledit axe fondamental, un trajet plus grand et à plus faible accélération que suivant ledit axe additionnel,
**caractérisé par le fait que**,
dans le cas d'une latitude de mouvement préétablie Sz de l'axe additionnel, il s'opère un réglage d'une vitesse de mouvement constante recherchée d'un système de mesure ou d'un outil, vis-à-vis de l'objet à mesurer ou à usiner, exprimée par $Vbmax <= SQRT (Sz \times Bb/2)$ et/ou par $Vbmax <= Vzmax$, Vzmax étant la vitesse maximale dudit axe additionnel, et la position de repos recherchée du système de mesure ou de l'outil étant décalée dans la direction du mouvement intégral en dehors de la position centrale, dans les limites de la latitude de mouvement d'un axe additionnel, dans le cas d'un mouvement intégral non accéléré suivant l'axe considéré.

15. Procédé selon la revendication 14, **caractérisé par le fait qu'**un profil de mouvement intégral d'une trajectoire, devant être parcourue en continu, est instauré avec prise en considération de l'accélération maximale des axes additionnels.

16. Procédé selon la revendication 15, **caractérisé par le fait que** le profil de mouvement intégral est composé de segments de trajectoire pour lesquels les positions extrêmes, les vitesses et les nécessaires accélérations sont consignées dans les axes à prendre en considération.

17. Procédé selon l'une des revendications 15 ou 16, **caractérisé par le fait que** le profil de mouvement intégral est instauré lors d'un procédé anticipatif, *look-ahead*.

Fig. 1

Fig. 2

BG   Sz   BG

31

30

32

33   **Fig. 3a**

Sz

31

30

**Fig. 3b**

Vbmax

t₃

t

**Fig. 4a**

Vbmax

S

t₂

t₄

t

**Fig. 4b**

Vbmax

S   t₁

t₂

t

**Fig. 4c**

Fig. 5

Fig. 6a

Fig. 6b

Fig. 6c

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 594699 B1, Ehlerding
- WO 200675209 A2, Gattiglio
- WO 9629634 A1, Cutler
- US 5910260 A, Gerber
- EP 1294544 B1, Sartorio
- EP 1758003 A1, Cardinale
- EP 594699 A
- US 5801939 A, Okazaki
- US 5109148 A, Fujita & Bamba
- DE 10156781 C1, Heinermann
- EP 1204544 B1